(19) Europäisches Patentamt
European Patent Office
Office européen des brevets

(11) **EP 4 659 824 A1**

(12) **EUROPEAN PATENT APPLICATION**
published in accordance with Art. 153(4) EPC

(43) Date of publication:
**10.12.2025 Bulletin 2025/50**

(21) Application number: **24781306.6**

(22) Date of filing: **29.03.2024**

(51) International Patent Classification (IPC):
*A62C 35/02* (2006.01)     *A62C 35/10* (2006.01)
*A62C 3/16* (2006.01)      *A62C 2/06* (2006.01)
*A62D 1/06* (2006.01)      *A62D 1/00* (2006.01)
*H01M 10/42* (2006.01)

(52) Cooperative Patent Classification (CPC):
**A62C 2/06; A62C 3/16; A62C 35/02; A62C 35/10;
A62D 1/00; A62D 1/06; H01M 10/42**

(86) International application number:
**PCT/KR2024/004067**

(87) International publication number:
**WO 2024/205316 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 KR 20230041414**

(71) Applicant: **LG CHEM, LTD.**
**Seoul 07336 (KR)**

(72) Inventors:
• **LEE, Hong Chan**
  **Daejeon 34122 (KR)**
• **KIM, Jang Hwan**
  **Daejeon 34122 (KR)**
• **LEE, Seung Min**
  **Daejeon 34122 (KR)**
• **JUNG, Jin Mi**
  **Daejeon 34122 (KR)**

(74) Representative: **Plasseraud IP**
**104 Rue de Richelieu**
**CS92104**
**75080 Paris Cedex 02 (FR)**

(54) **COMPOSITION**

(57)     The present specification discloses a composition, a fire extinguishing device, and a use thereof. The composition and the fire extinguishing device can be applied to a product with a possibility of abnormal heat generation, ignition, and/or explosion during drive, storage, and/or maintenance processes to effectively respond to the heat generation, ignition, and explosion. The composition and the fire extinguishing device can be applied, for example, to an article comprising a plurality of the products to respond to abnormal heat generation, explosion, and/or ignition occurring in any one product, and can prevent propagation of such heat generation, explosion, and/or ignition to other adjacent products. The composition and the fire extinguishing device also have excellent handleability and storage stability. The present specification also discloses a use of the composition and the fire extinguishing device.

Fig. 2

## Description

### Technical Field

This application claims the benefit of priority based on Korean Patent Application No. 10-2023-0041414 dated March 29, 2023, the disclosure of which is incorporated herein by reference in its entirety.

The present specification discloses a composition, a fire extinguishing device, and a use thereof.

### Background Art

A technology is needed to ensure stability for products with a risk of abnormal heat generation or ignition and explosion (hereinafter, may be referred to as "hazardous products"). Particularly, in the case where multiple hazardous products are included, if abnormal heat generation, ignition, and/or explosion occurring in any one product has a chain effect on other adjacent products, a major problem in terms of stability may occur. A representative example of such a phenomenon is a so-called TR (Thermal Runaway) or TP (Thermal Propagation) phenomenon that occurs in battery modules or battery packs, and the like.

A battery module or a battery pack comprises a plurality of battery cells or a plurality of battery modules disposed adjacent to each other. In such a structure, when abnormal heat generation, ignition, and/or explosion occurs in any one battery cell and/or battery module, a phenomenon in which such heat generation, ignition, and/or explosion is transmitted to other adjacent battery cells, and the like in a chain reaction is the TR or TP phenomenon.

With the development of products that require a lot of energy for drive, such as electric vehicles, the energy capacity of the battery module or battery pack has increased significantly, and accordingly, the risk of the TR or TP phenomenon has also increased significantly.

Particularly, in a case, such as electric vehicles, where a user's stabilization is directly affected by the TR or TP phenomenon, the chain heat generation, ignition, and explosion, such as the TR or TP, must be managed.

### Disclosure

### Technical Problem

The present specification discloses a composition, a fire extinguishing device, and a use thereof.

The present specification is intended to disclose a composition and a fire extinguishing device, which can be applied to a product with a possibility of abnormal heat generation, ignition, and/or explosion during drive, storage, and/or maintenance processes to effectively respond to the heat generation, ignition, and explosion, and a use thereof.

For example, the composition and the fire extinguishing device disclosed in the present specification can be applied to an article comprising a plurality of the products to respond to abnormal heat generation, explosion, and/or ignition occurring in any one product, and can prevent propagation of such heat generation, explosion, and/or ignition to other adjacent products.

It is also one object of the present specification to disclose the composition and the fire extinguishing device having excellent handleability and storage stability. The present specification is also intended to disclose a use of the composition and the fire extinguishing device.

### Technical Solution

Among physical properties mentioned in this specification, the physical property affected by a temperature is a physical property measured at room temperature, unless otherwise specified.

The term room temperature is a natural temperature without artificially warming or cooling, which means, for example, any one temperature within a range of about 10°C to 30°C, or a temperature of about 23°C or about 25°C or so.

Unless otherwise specified in this specification, the unit of temperature is °C.

Among physical properties mentioned in this specification, the physical property affected by a pressure is a physical property measured at normal pressure, unless otherwise specified.

The term normal pressure is a natural pressure without artificially pressurizing or depressurizing, in which a degree within a range of about 700 mmHg to 800 mmHg is typically referred to as the normal pressure.

Among physical properties mentioned in this specification, the physical property affected by humidity is a physical property measured at standard-state humidity, unless otherwise specified.

The standard-state humidity means about 40%, 50%, 60%, or 65% in terms of relative humidity.

This specification discloses a composition.

The term composition means a target comprising two or more components. Such a composition may be a fire

**EP 4 659 824 A1**

extinguishing composition. The fire extinguishing composition is a composition capable of responding to abnormal heat generation, flames, and explosions, and the like to be suppressed.

Such a composition can be especially combined with a structure of a fire extinguishing device, which is described below, to exhibit excellent effects.

Therefore, the present specification also discloses a fire extinguishing device.

First, a fire extinguishing device will be described.

The fire extinguishing device comprises a case having a sealed space inside, and a vaporizable substance or composition existing in the sealed space.

The composition may be the above-described fire extinguishing composition, and the vaporizable substance may be one component of the composition.

The case is a container for maintaining the vaporizable substance or composition. The case has the sealed space inside, or is prepared so that it may form the sealed space. At this time, the matter that the case is prepared so that it may form a sealed space inside means that the case is present in a state where the sealed space is formed inside the case, or so that a certain space exists inside the case, and the space is not in a sealed state, but the sealed space can be formed in a manner of sealing the open portion.

The sealed space of such a case may have a vent region. The term vent region may mean a region where it is sealed in a first state to be present so that the sealed state of the space can be maintained, but is open in a second state so that the materials inside the space can be discharged. The second state may mean, for example, a state in which abnormal ignition, heat generation and/or explosion occurs in an environment to which the composition or fire extinguishing device is applied, and the first state may mean a state in which the abnormal ignition, abnormal heat generation, and abnormal explosion do not occur.

Such a vent region may be formed in a manner to be described below.

In one example, the case may have a WVTR (Water Vapor Transmission Rate) in a predetermined range, or may include a portion having such a WVTR. For example, at least the portion of the case forming the sealed space may have a WVTR (Water Vapor Transmission Rate) in a predetermined range. For example, the upper limit of the WVTR of the case may be 10, 9.5, 9, 8.5, 8, 7.5, 7, 6.5, 6, 5.5, 5, 4.5, 4, 3.5, 3, 2.5, 2, 1.5, 1, 0.5, 0.45, 0.4, 0.35, 0.3, 0.25, 0.2, 0.15, 0.1, 0.05, or 0.01 or so, and the lower limit thereof may be 0, 0.1, 0.2, 0.3, 0.4, or 0.5 or so. The WVTR may be within a range of less than or equal to, or less than any one of the above-described upper limits; or within a range of less than or equal to, or less than any one of the above-described upper limits while being within a range of more than or equal to, or more than any one of the above-described lower limits. The closer the WVTR is to the range disclosed in Examples sections of this specification within the above-described range, the more excellent the effect can be secured.

The unit of the WVTR is $g/m^2 \cdot day$, which is measured in the manner described in "9. WVTR (Water Vapor Transmission Rate) evaluation" of Example sections in this specification.

In one example, when a sealed space has been formed within the case at least, a certain level or more of the entire area of the case forming the sealed space may have the WVTR within the above-described range.

For example, the WVTR in the above-described range can be confirmed in an area more than or equal to a certain ratio of the total area of the case. For example, the lower limit of the ratio of the area of the portion having the WVTR in the above-described range among the total area of the case may be 80%, 85%, 90%, 95%, 97%, or 99% or so, and the upper limit thereof may be 100% or so. The ratio may be within a range of more than or equal to, or more than any one of the above-described lower limits; or within a range of less than or equal to, or less than any one of the above-described upper limits while being within a range of more than or equal to, or more than any one of the above-described lower limits.

In another example, the area in a certain level or more among the area of the portion forming the sealed space in the case may have the WVTR (Water Vapor Transmission Rate) in the above-described range. For example, the lower limit of the ratio of the portion exhibiting the WVTR in the above-described range among the area of the case portion forming the sealed space may be 80%, 85%, 90%, 95%, 97%, or 99% or so, and the upper limit thereof may be 100% or so. The ratio may be within a range of more than or equal to, or more than any one of the above-described lower limits; or within a range of less than or equal to, or less than any one of the above-described upper limits while being within a range of more than or equal to, or more than any one of the above-described lower limits.

The content means that the sealed space inside the case is surrounded entirely by the region having substantially the WVTR in the above-described range. By this configuration, an instantaneous increase in internal pressure inside a fire extinguishing device to be described below can be effectively induced.

The fire extinguishing device is configured so that it can stably maintain the internal vaporizable substance or composition in a normal state, and then release the vaporizable substance, all or a part of the composition, or its vapor to the outside in an abnormal state. The abnormal state may be, for example, the second state, and the normal state may be, for example, the first state.

Descriptions will be made assuming a case where the fire extinguishing device is applied to a battery module.

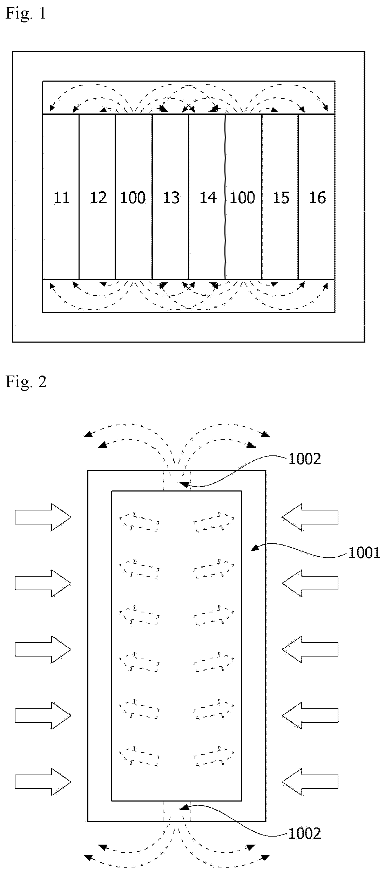

Fig. 1 is a schematic diagram of a case where the fire extinguishing device (S) is applied to a battery module. As shown in Fig. 1, the battery module may be configured by arranging a plurality of battery cells (11, 12, 13, 14, 15, 16) adjacent to each other, where the fire extinguishing device (S) may be arranged between battery cells as shown in the drawing (for example, between 12 and 13 in Fig. 1 and between 14 and 15 in Fig. 1).

The fire extinguishing device (S) maintains a vaporizable substance, and the like inside in a normal state. In an abnormal state, the vaporizable substance, and the like of the fire extinguishing device (S) may be ejected (dotted arrows in Fig. 1) while having directionality, for example, through the above-described vent region, and the like, thereby responding to high temperatures or flames due to abnormal heat generation, ignition, and/or explosion. In Fig. 1, the case where the substances are ejected from both directions of the upper and lower ends in the fire extinguishing device (S) is described, but the ejection direction is not limited to Fig. 1. The ejection direction may also be in one direction of the fire extinguishing device (S), and may also be in two or more directions. Such ejection directions may be adjusted by forming the vent region.

In order that the fire extinguishing device effectively performs the function in the abnormal state, it is required that the vaporizable substance, and the like, existing inside the case in the normal state can be stably maintained, and that the vaporizable substance, and the like can be quickly exhausted by discharging all of them to the outside in a vaporized state as much as possible when an abnormal state occurs. The fire extinguishing device can satisfy the requirements.

A principle in which the fire extinguishing device performs the action is explained.

Fig. 2 shows only the fire extinguishing device (S) of Fig. 1 separately. In a configuration such as Fig. 1, if abnormal heat generation, ignition, and/or explosion occurs in at least one of the battery cells, high heat in a certain level or more is instantaneously applied to the fire extinguishing device as indicated by the solid arrows in Fig. 2. The vaporizable substance present inside the fire extinguishing device is vaporized by the applied heat. In Fig. 2, as indicated by dotted arrows in the internal sealed space of the fire extinguishing device case (1001), the substance thus vaporized is randomly propagated in all directions within the space, where if the sealed space of the case (1001) is substantially surrounded by the portion having the above-described WVTR, the vaporized substance cannot be released to the outside, so that the inside of the case (1001) becomes a very high-pressure state instantaneously. When the vent region (1002) of the case is opened momentarily at a high pressure in a certain level or more, the internal gas is quickly discharged to the outside through the opened vent region (1002).

If the WVTR of the case surrounding the sealed space is not high, the internal pressure of the case (1001) may not effectively increase in the state, or the increase speed may be slow, so that the opening of the vent region (1002) may not be effectively performed, or even when the vent region (1002) is opened, the internal pressure may not be sufficient, so that some of the vaporized material may remain without being consumed due to discharge to the outside, or the discharge speed may be excessively slow.

If the WVTR of the case is kept low, there is an additional effect of ensuring the storage stability of the internal material in the normal state.

The method of forming the vent region is not particularly limited. The vent region may be formed by designing the case forming the sealed space so that it may be opened when the internal pressure of the case has reached a certain level. For example, if some regions of the case forming the sealed space are configured to have lower strength than other regions, the portion having the lower strength may be opened by the increased internal pressure. In addition, by forming a sealed space through sealing using a hot melt material, and the like, it is also possible to use a method in which opening occurs by melting at a predetermined temperature, and the like. In another method, the vent region may be formed by making only a certain portion of the case forming the sealed space to have a thinner thickness relative to other regions. Such a method of forming the vent region can be easily adopted by those skilled in the art.

For example, when the fire extinguishing device is applied to a battery module or pack, for the convenience of application, the case may be a rectangular case, a pouch-shaped case, and/or a cylindrical case, which is the same shape as the battery cell. In this case, the vent region may also be formed by a method of controlling the bonding strength of the cover forming the sealed space in the rectangular or cylindrical case.

The case may be formed using a known material if it may satisfy the above-described WVTR, where the material may have a single-layered structure of a single layer or two or more layers.

For example, the case may be formed using a material, which may exhibit the WVTR in the above range, of an appropriate organic layer and/or inorganic layer.

As the organic layer, for example, a known polymer film or sheet may be used. The organic film may be exemplified by a cellulose-based polymer film; a COP (cyclo olefin copolymer) film; an acrylic polymer film; a polyolefin film; a PVA (polyvinyl alcohol) film; a PVC (poly(vinyl chloride)) film, a PES (poly ether sulfone) film; a PEEK (polyetheretherketon) film; a PPS (polyphenylsulfone) film; a PEI (polyetherimide) film; a PEN (polyethylenemaphthatlate) film; a polyester film such as a PET (poly(ethylene terephthalate)) film; a PI (polyimide) film; a PSF (polysulfone) film and/or a PAR (polyarylate) film, and the like.

For example, a metal layer, a metal oxide layer, a metal nitride layer, or a metal oxynitride layer, and the like may be used as the inorganic layer. For example, the inorganic layer may be a metal layer, a metal oxide layer, a metal nitride layer, or a metal oxynitride layer, and the like, which contains one or more selected from the group consisting of In, Sn, Pb, Au, Cu, Ag, Zr, Hf, Zn. Al, Si, La, Ti, and Ni. For example, a foil, sheet, or film of the material may be applied, or a layer formed by depositing the metal layer, the metal oxide layer, the metal nitride layer, or the metal oxynitride layer on an appropriate base material may be used.

The material forming the case may be any single layer selected from the inorganic layer and the organic layer, or a multilayered structure in which two or more of the layers are laminated.

The thickness of the inorganic layer and/or the organic layer is selected in consideration of the physical properties such as the desired WVTR, which is not particularly limited. For example, the lower limit of the thickness may be 1 $\mu$m, 5 $\mu$m, 10 $\mu$m, 15 $\mu$m, 20 $\mu$m, 25 $\mu$m, or 30 $\mu$m or so, and the upper limit thereof may be 5,000 $\mu$m, 4,000 $\mu$m, 3,000 $\mu$m, 2,000 $\mu$m, 1,000 $\mu$m, 500 $\mu$m, 200 $\mu$m, 150 $\mu$m, 100 $\mu$m, 90 $\mu$m, 80 $\mu$m, 70 $\mu$m, 60 $\mu$m, 50 $\mu$m, 40 $\mu$m, or 30 $\mu$m or so. The thickness may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

The fire extinguishing device may comprise additional constitutions so that the action is performed more effectively.

For example, the fire extinguishing device may further comprise a thermally conductive layer. Such a thermally conductive layer may be present at an appropriate location within the fire extinguishing device. For example, the thermally conductive layer may be present between the case and the vaporizable substance or composition in the fire extinguishing device, or the thermally conductive layer may be present adjacent to the case.

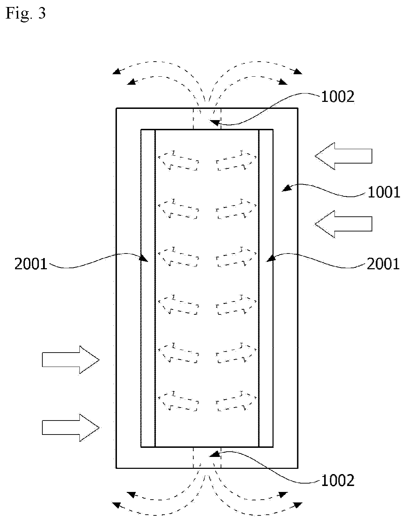

Fig. 3 is an example of a case where the thermally conductive layer (2001) is added thereto in the fire extinguishing device of Fig. 2. The thermally conductive layer may be present at a different location within the case, and the number thereof may also be one, or a plurality of two or more.

The term thermally conductive layer is a layer whose thermal conductivity (based on 20°C) is in a range to be described below. The lower limit of the thermal conductivity (based on 20°C) of the thermally conductive layer may be 10, 15, 18, 20, 50, 100, 150, 200, 250, 300, 350, or 400 or so, and the upper limit thereof may be 2,000, 1,500, 1,000, 900, 800, 700, 600, 500, 400, 300, 200, 100, or 50 or so. The thermal conductivity may be within a range of more than or equal to, or more than any one of the above-described lower limits; or within a range of less than or equal to, or less than any one of the above-described upper limits while being within a range of more than or equal to, or more than any one of the above-described lower limits. The unit of the thermal conductivity is W/mK, which may be evaluated in the manner described in "15. Thermal conductivity evaluation" of Example sections of this specification.

The type of the thermally conductive layer is not particularly limited if it has the thermal conductivity. Usually, metal materials may be used as the thermally conductive layer because they have excellent thermal conductivity properties. For example, a layer made of a metal material such as aluminum, gold, pure silver, tungsten, copper, nickel, or platinum may be applied.

The thickness of the thermally conductive layer is not particularly limited, where an appropriate thickness may be set in consideration of the specifications of the fire extinguishing device, and the like. For example, the lower limit of the thickness of the thermally conductive layer may be 1 $\mu$m, 5 $\mu$m, 10 $\mu$m, 15 $\mu$m, 50 $\mu$m, 75 $\mu$m, or 90 $\mu$m or so, and the upper limit thereof may be 500 $\mu$m, 400 $\mu$m, 300 $\mu$m, 200 $\mu$m, 100 $\mu$m, 50 $\mu$m, 40 $\mu$m, or 30 $\mu$m or so. The thickness may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

As shown in Fig. 3, in some cases, the heat generated in an abnormal state may not be uniformly applied to the fire extinguishing device, but may also be locally applied to only a certain region. However, in order that the vaporizable substance inside the fire extinguishing device quickly vaporizes to achieve a high-pressure state, the heat in the abnormal state must be uniformly applied to the fire extinguishing device. In the case where the thermally conductive layer exists, even if the heat in the abnormal state is locally applied, it may quickly transfer the relevant heat throughout the fire extinguishing device, and accordingly the fire extinguishing action of the fire extinguishing device as described above may occur quickly and efficiently.

In order that the fire extinguishing device more efficiently secures the effect, the amount of the vaporizable substance or a composition, which is described below, including the vaporizable substance present in the internal space or the sealed space of the case in the fire extinguishing device may be adjusted. For example, the lower limit of the ratio of the volume occupied by the vaporizable substance or the composition in the total volume of the internal space or the sealed space of the case may be 70%, 75%, 80%, 85%, 90%, or 95% or so, and the upper limit thereof may be 100% or so. The ratio may be within a range of more than or equal to, or more than any one of the above-described lower limits; or within a range of less than or equal to, or less than any one of the above-described upper limits while being within a range of more than or equal to, or more than any one of the above-described lower limits. Under such a ratio, the rapid increase in the internal pressure as described above may be more effectively induced.

Hereinafter, the fire extinguishing composition will be described.

The fire extinguishing composition may be included in the sealed space within the fire extinguishing device, and may be particularly formulated so that the action described in Figs. 2 and 3 above can be more effectively exhibited.

The composition may be non-flammable, and be formulated to be environment- and human body-friendly.

For example, the composition may have a flammability rating of 0 or 1 according to the NFPA (National Fire Protection Association) 704 standard. The NFPA 704 standard is a standard announced by the US National Fire Protection Association (NFPA), which is a standard expressed as so-called fire diamonds created to enable rapid response to hazardous materials in emergency situations, and the flammability rating is indicated by a red area. The standard is classified into grades 0, 1, 2, 3, and 4, among which grade 0 means no flammability, and grade 1 is a case where it ignites when sufficiently heated, which is approximately a case where the flash point is 93°C or more. The evaluation method of such flammability ratings follows the NFPA (National Fire Protection Association) 704 standard.

The composition may exhibit non-flammability having a flammability rating of 0 or 1 according to the NFPA (National Fire Protection Association) 704 standard. For example, the composition may have a health hazard rating of 0, 1, or 2 according to the NFPA (National Fire Protection Association) 704 standard. The health hazard rating is indicated by a blue area in the fire diamonds of the NFPA 704 standard. The standard is classified into grades 0, 1, 2, 3, and 4, wherein grade 0 is a case where there is no health hazard and no special precautions are required, grade 1 is a case where there is a possibility of causing minor injury upon exposure, and grade 2 is a case where there is a possibility of causing temporary disability or injury upon continuous/normal contact, but not chronic contact.

In order that the composition exhibits the grade, each component constituting the composition may also use a material exhibiting the flammability and/or health hazard rating.

The composition comprises at least the vaporizable substance. Such a vaporizable substance is vaporized under a certain temperature and/or pressure condition, thereby serving to increase the internal pressure, as described above. In addition, the vaporizable substance may be ejected to the outside in a vaporized state, thereby also performing fire extinguishing and/or cooling functions.

A suitable type of vaporizable substance may be selected and used. For example, the vaporizable substance may be a substance known as a so-called vaporizable substance. For example, the vaporizable substance may exist in a liquid phase at least at room temperature (about 25°C). The vaporizable substance may be used for increasing the internal pressure of the sealed space by instantaneous vaporization, reducing heat by heat exchange, and the like, or removing the flames in response to abnormal heat generation, flames, and explosion occurring in the adjacent target.

As the vaporizable substance, any non-flammable substance may be used without special limitation. For example, as the vaporizable substance, a substance having a freezing point and/or boiling point within a predetermined range may be used.

For example, the lower limit of the freezing point of the vaporizable substance may be -5°C, -4°C, -3°C, -2°C, -1°C, or 0°C or so, and the upper limit thereof may be 10°C, 9°C, 8°C, 7°C, 6°C, 5°C, 4°C, 3°C, or 2°C or so. The freezing point may be within a range of less than or equal to, or less than any one of the above-described upper limits while being within a range of more than or equal to, or more than any one of the above-described lower limits. The freezing point is the freezing point under 1 atm.

The vaporizable substance may have a boiling point within a certain range to exhibit appropriate vaporability. For example, the lower limit of the boiling point of the vaporizable substance may be 80°C, 85°C, 90°C, or 95°C or so, and the upper limit thereof may be 120°C, 115°C, 110°C, or 105°C or so. The boiling point may be within a range of less than or equal to, or less than any one of the above-described upper limits while being within a range of more than or equal to, or more than any one of the above-described lower limits. The boiling point is a boiling point under 1 atm.

As the vaporizable substance, any suitable type may be selected and used without special limitation if it has a freezing point and/or a boiling point within the range and is non-flammable. A representative example of a non-flammable vaporizable substance having a freezing point and/or a boiling point within the range is water, and accordingly, water may be used as the vaporizable substance, but the type of applicable vaporizable substance is not limited thereto.

In order that the composition is applied to the sealed space of the fire extinguishing device to increase the internal pressure at an appropriate rate at a necessary time point, it is necessary to control the content of the vaporizable substance within the sealed space or within the composition.

For example, the lower limit of the ratio of the vaporizable substance within the composition or within the sealed space of the fire extinguishing device may be 50 weight%, 55 weight%, 60 weight%, 65 weight%, 70 weight%, 75 weight%, or 80 weight% or so, and the upper limit thereof may be 95 weight%, 90 weight%, 85 weight%, 80 weight%, 75 weight%, 70 weight%, 65 weight%, or 60 weight% or so. The ratio may be within a range of more than or equal to, or more than any one of the above-described lower limits; or within a range of less than or equal to, or less than any one of the above-described upper limits while being within a range of more than or equal to, or more than any one of the above-described lower limits. The effect can be improved as the content of the vaporizable substance approaches the range disclosed in the examples from the above-described range. The ratio is a percentage based on the total weight of all components present in the composition or all components present in the sealed space.

The composition or the sealed space may comprise only the vaporizable substance, or may further comprise other components.

For example, the composition or the sealed space may further comprise a freezing point adjuster. The term freezing point adjuster is a component controlling the freezing point and/or boiling point of the composition through a so-called freezing point depression phenomenon. In order that the fire extinguishing device effectively exhibits the action described with reference to Figs. 2 and 3, instantaneous vaporization of the vaporizable substance must occur at a necessary time point, where to this end, a freezing point adjuster may be applied. Also, it is advantageous for the vaporizable substance, and the like to exist in a liquid phase at the time point when the abnormal state occurs, so that such a state may also be secured with the freezing point adjuster. In addition, in the case where the composition is applied to a highly integrated product such as a battery module or a battery cell, if a phase transition occurs due to cooling of the composition in a low-temperature environment, it may also adversely affect adjacent products by the volume change and the hardness change of the composition, whereas the above problem may also be solved through addition of the freezing point adjuster.

To secure the above-described effect, especially the effect of instantaneous and complete rapid vaporization of the vaporizable substance at a necessary time point by applying the freezing point adjuster, the form in which the freezing point adjuster is applied may be controlled.

For example, the freezing point adjuster may be present so that $\Delta T_f$ of Equation 1 below may be within a predetermined range.

$$[\text{Equation 1}]$$

$$\Delta T_f = K_f \times M \times I$$

In Equation 1, $K_f$ is the freezing point depression constant of the vaporizable substance.

The unit of the $K_f$ is °C/m, and for example, if the vaporizable substance is water, the $K_f$ is about 1.86 or so.

M in Equation 1 is the molal concentration of the freezing point adjuster, which is the molal concentration for the vaporizable substance. Therefore, the M is the number of moles of the freezing point adjuster present per 1 kg of the vaporizable substance in the composition or the sealed space.

I in Equation 1 is the number (mole number) of ions formed by 1 mole of the freezing point adjuster when the freezing point adjuster has been dissociated, where the dissociation means a state in which the freezing point adjuster is completely dissociated. Therefore, for example, when the freezing point adjuster is no ionic compound, the I is 1.

In the case where two or more freezing point adjusters or ionic compounds are present in the composition, the $\Delta T_f$ is calculated for each compound, and the sum of these values is used as the $\Delta T_f$ value for the composition.

The lower limit of $\Delta T_f$ in Equation 1 may be, for example, 5, 10, 15, 20, 22, or 24 or so, and the upper limit thereof may be 50, 45, 40, 35, 30, 25, 20, or 15 or so. The unit of the $\Delta T_f$ is °C. The $\Delta T_f$ may be within a range of less than or equal to, or less than any one of the above-described upper limits while being within a range of more than or equal to, or more than any one of the above-described lower limits.

By applying the freezing point adjuster in the above range, the vaporizable substance can be rapidly and substantially completely vaporized at a necessary time point to quickly increase the internal pressure of the sealed space, and the vaporizable substance can exist in a liquid phase at a necessary time point, and it is possible to prevent the volume and hardness changes of the composition or the fire extinguishing device which can affect the drive of the product in the normal state. The $\Delta T_f$ can exhibit a more excellent effect as it approaches the range of the example from the range.

As the freezing point adjuster, for example, an alcohol or an ionic compound may be used. The category of ionic compounds includes ionic substances in themselves, or substances capable of generating ions, such as salts.

For example, as the alcohol, an alcohol having a boiling point within a predetermined range may be used. For example, the lower limit of the boiling point of the alcohol may be 150°C, 170°C, or 190°C or so, and the upper limit thereof may be 300°C, 280°C, 260°C, 240°C, 220°C, or 200°C or so. The boiling point may be within a range of less than or equal to, or less than any one of the above-described upper limits while being within a range of more than or equal to, or more than any one of the above-described lower limits.

For example, as the alcohol, an alcohol having a molar mass within a predetermined range may be used. For example, the lower limit of the molar mass of the alcohol may be 20 g/mol, 30 g/mol, 40 g/mol, 50 g/mol, 60 g/mol, 70 g/mol, 80 g/mol, or 90 g/mol or so, and the upper limit thereof may be 300 g/mol, 280 g/mol, 260 g/mol, 240 g/mol, 220 g/mol, 200 g/mol, 180 g/mol, 160 g/mol, 140 g/mol, 120 g/mol, 100 g/mol, 90 g/mol, 80 g/mol, or 70 g/mol or so. The molar mass may be within a range of less than or equal to, or less than any one of the above-described upper limits while being within a range of more than or equal to, or more than any one of the above-described lower limits.

The type of the alcohol is not particularly limited, and for example, a polyhydric alcohol such as ethylene glycol or glycerin may be applied.

As the ionic compound which is applicable as the freezing point adjuster, for example, one or more salts selected from the group consisting of formates, acetates, carbonates, and sulfates exist, and specifically, one or more of salts, such

as sodium acetate ($CH_3COONa$), sodium formate ($HCOONa$), potassium acetate ($CH_3COOK$), potassium formate ($HCOOK$), calcium formate (($HCOO)_2Ca$), magnesium formate (($HCOO)_2Mg$), potassium carbonate ($K_2CO_3$), and/or ammonium sulfate (($NH_4)_2SO_4$), may be used.

The freezing point adjuster may be present so that the concentration calculated in conformity to the vaporizable substance is within a predetermined range. Here, the concentration is a molal concentration, which is specifically the number of moles of the freezing point adjuster present per 1 kg of the vaporizable substance present in the composition. In one example, the lower limit of the molal concentration may be 1, 1.5, 2, 4, 6, 8, 10, 12, 14, or 16 or so, and the upper limit thereof may be 50, 48, 46, 44, 42, 40, 38, 36, 34, 32, 30, 28, 26, 24, 22, 20, 15, 11, 9, 7, 5, or 3 or so. The molal concentration may be within a range of less than or equal to, or less than any one of the above-described upper limits while being within a range of more than or equal to, or more than any one of the above-described lower limits. The molal concentration may be adjusted in consideration of $\Delta T_f$ of Equation 1 above.

It may be appropriate to use a component having a flammability rating of 0 or 1 according to the NFPA (National Fire Protection Association) 704 standard, and/or a health hazard rating of 0, 1, or 2 according to the NFPA (National Fire Protection Association) 704 standard as the freezing point adjuster. Various freezing point adjusters capable of inducing the freezing point depression phenomenon are known, but most of them have flammability and/or toxicity, so that when it is necessary to achieve the NFPA rating, and the like for the purpose, it is also necessary to consider the NFPA rating upon selection of the freezing point adjuster.

It may be appropriate for the freezing point adjuster to have a certain level of solubility in the vaporizable substance. For selection of a freezing point adjuster with appropriate solubility, a degree of freedom in the additive amount of the freezing point adjuster increases, and it is possible to select an additive amount capable of securing the desired freezing point while improving the fire extinguishing function without any inhibition.

For example, the lower limit of the solubility of the freezing point adjuster to 100 g of the vaporizable substance or water at 0°C may be 20 g, 25 g, 30 g, 35 g, 40 g, 45 g, 50 g, 55 g, 60 g, 65 g, 70 g, 75 g, 80 g, 85 g, 90 g, 95 g, 100 g, 110 g, 115 g, 120 g, 125 g, 130 g, 135 g, 140 g, 145 g, 150 g, 155 g, 160 g, 165 g, 170 g, 175 g, 180 g, 185 g, 190 g, 195 g, 200 g, 205 g, 210 g, or 215 g or so, and the upper limit thereof may be 1000 g, 900 g, 800 g, 700 g, 600 g, 500 g, 400 g, 300 g, 250 g, 245 g, 240 g, 235 g, 230 g, 225 g, 220 g, 215 g, 210 g, 205 g, 200 g, 195 g, 190 g, 185 g, 180 g, 175 g, 170 g, 165 g, 160 g, 155 g, 150 g, 145 g, 140 g, 135 g, 130 g, 125 g, 120 g, 115 g, 110 g, 105 g, 100 g, 95 g, 90 g, 85 g, 80 g, 75 g, 70 g, 65 g, 60 g, 55 g, 50 g, 45 g, 40 g, 35 g, or 30 g or so. The solubility may be within a range of more than or equal to, or more than any one of the above-described lower limits; or within a range of less than or equal to, or less than any one of the above-described upper limits while being within a range of more than or equal to, or more than any one of the above-described lower limits. The solubility is the weight (g) of the freezing point adjuster that can be dissolved at most in 100 g of the vaporizable substance or water at 0°C. Such solubility may be evaluated in the manner described in "10. Solubility evaluation" of Example sections in this specification.

The lower limit of the solubility of the freezing point adjuster in 100 g of the vaporizable substance or water at 25°C may be 70 g, 75 g, 80 g, 85 g, 90 g, 95 g, 100 g, 110 g, 115 g, 120 g, 125 g, 130 g, 135 g, 140 g, 145 g, 150 g, 155 g, 160 g, 165 g, 170 g, 175 g, 180 g, 185 g, 190 g, 195 g, 200 g, 205 g, 210 g, 215 g, 225 g, 230 g, 235 g, 240 g, 255 g, 260 g, 265 g, 270 g, 275 g, 280 g, 285 g, 290 g, 295 g, 300 g, 305 g, 310 g, 315 g, or 320 g or so, and the upper limit thereof may be 1000 g, 900 g, 800 g, 700 g, 600 g, 500 g, 400 g, 350 g, 345 g, 340 g, 335 g, 330 g, 325 g, 320 g, 315 g, 310 g, 305 g, 300 g, 295 g, 290 g, 280 g, 275 g, 270 g, 265 g, 260 g, 255 g, 250 g, 245 g, 240 g, 235 g, 230 g, 225 g, 220 g, 215 g, 210 g, 205 g, 200 g, 195 g, 190 g, 185 g, 180 g, 175 g, 170 g, 165 g, 160 g, 155 g, 150 g, 145 g, 140 g, 135 g, 130 g, 125 g, 120 g, 115 g, 110 g, 105 g, or 100 g or so. The solubility may be within a range of more than or equal to, or more than any one of the above-described lower limits; or within a range of less than or equal to, or less than any one of the above-described upper limits while being within a range of more than or equal to, or more than any one of the above-described lower limits. The solubility is the weight (g) of the freezing point adjuster that can be dissolved in 100 g of the vaporizable substance or water at 25°C at most. Such solubility may be evaluated in the manner described in "10. Solubility evaluation" of Example sections in this specification.

As the freezing point adjuster, a component having a molar mass within a predetermined range may be used. When the molar weight of the freezing point adjuster is maintained at an appropriate level, the function (e.g., fire extinguishing function) of other components of the composition can be maintained and improved. For example, the lower limit of the molar mass of the freezing point adjuster may be 10 g/mol, 15 g/mol, 20 g/mol, 25 g/mol, 30 g/mol, 35 g/mol, 40 g/mol, 45 g/mol, 50 g/mol, 55 g/mol, 60 g/mol, 65 g/mol, 70 g/mol, 75 g/mol, 80 g/mol, 85 g/mol, 90 g/mol, or 95 g/mol or so, and the upper limit thereof may be 300 g/mol, 250 g/mol, 200 g/mol, 150 g/mol, 145 g/mol, 140 g/mol, 135 g/mol, 130 g/mol, 125 g/mol, 120 g/mol, 115 g/mol, 110 g/mol, 105 g/mol, 100 g/mol, 95 g/mol, 90 g/mol, 85 g/mol, 80 g/mol, 75 g/mol, 70 g/mol, or 65 g/mol or so. The molar mass may be within a range of less than or equal to, or less than any one of the above-described upper limits while being within a range of more than or equal to, or more than any one of the above-described lower limits.

In order that the freezing point adjuster exhibits the flammability and health hazard ratings of NFPA 704, a component without containing any specific functional groups may be used. For example, as the freezing point adjuster, components without containing a hydroxyl group and/or chlorine may be used, and components without containing any components that generate other sulfur dioxide gases, ammonia, and ethylene oxide, or generate the relevant components may be used. The freezing point adjuster comprising such components or functional groups may not exhibit the flammability rating (red item) and health hazard rating (blue item) of the NFPA 704 standard as described above.

Such a freezing point adjuster may be exemplified by, for example, one or more selected from the group consisting of ionic compounds, for example, formates, acetates, carbonates, and sulfates, among the above-described types.

The specific content of the freezing point adjuster may be adjusted in consideration of $\Delta T_f$ of Equation 1 above. For example, the lower limit of the weight ratio of the freezing point adjuster relative to 100 parts by weight of the vaporizable substance may be 1 part by weight, 5 parts by weight, 10 parts by weight, 15 parts by weight, 20 parts by weight, 25 parts by weight, 30 parts by weight, 35 parts by weight, 40 parts by weight, 45 parts by weight, 50 parts by weight, 55 parts by weight, 60 parts by weight, or 65 parts by weight or so, and the upper limit thereof may be 200 parts by weight, 180 parts by weight, 160 parts by weight, 140 parts by weight, 120 parts by weight, 100 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, or 40 parts by weight or so. The ratio may be within a range of less than or equal to, or less than any one of the above-described upper limits while being within a range of more than or equal to, or more than any one of the above-described lower limits.

The composition or the sealed space of the fire extinguishing device may comprise, as an additional component, for example, a fire extinguishing agent, for securing an appropriate fire extinguishing function, if necessary. When a fire extinguishing agent is included, the fire extinguishing agent may perform an action of promoting the carbonization action of the carbonizable organic material to be described below and/or an action of promoting gas generation of a gas-generating material to be described below.

The fire extinguishing agent performs an action of promoting the carbonization of the carbonizable organic material, whereby the fire extinguishing agent may also be called a carbonization catalyst.

It may be appropriate to use, as such a fire extinguishing agent, one having solubility in a certain level or more with respect to the vaporizable substance (for example, a vaporizable substance such as water). By adjusting the solubility, the carbonization action or gas generation action as described above may proceed more effectively without causing an agglomeration or phase separation phenomenon in the composition.

For example, the lower limit of the solubility of the fire extinguishing agent may be 5 g, 10 g, 15 g, 20 g, 25 g, 30 g, 35 g, or 40 g or so, and the upper limit thereof may be 1000 g, 900 g, 800 g, 700 g, 600 g, 500 g, 400 g, 300 g, 200 g, 100 g, 90 g, 80 g, 70 g, 60 g, 50 g, 40 g, or 30 g or so. The solubility may be within a range of more than or equal to, or more than any one of the above-described lower limits; or within a range of less than or equal to, or less than any one of the above-described upper limits while being within a range of more than or equal to, or more than any one of the above-described lower limits. The solubility is the weight (g) of the fire extinguishing agent that can be dissolved in 100 g of water at 25°C at most, which may be measured in the manner described in "10. Solubility evaluation."

As the fire extinguishing agent, an agent having the above solubility may be appropriately selected and used, and an example thereof includes phosphoric acid, phosphate, a phosphonate compound, or a phosphate compound. The fire extinguishing agent may be, for example, monobasic or dibasic ammonium phosphate, urea phosphate, guanyl urea phosphate, or ammonium polyphosphate, and the like, and one or two or more of the foregoing may be selected and used.

The fire extinguishing agent may be present in the composition in an appropriate content considering the intended effect. For example, the lower limit of the weight ratio of the fire extinguishing agent relative to 100 parts by weight of the vaporizable substance may be 1 part by weight, 5 parts by weight, 10 parts by weight, 15 parts by weight, or 20 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, 20 parts by weight, or 15 parts by weight or so. The ratio may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

The composition or the sealed space of the fire extinguishing device may comprise a carbonizable organic material as an additional component.

The carbonizable organic material is an organic material that is carbonized when exposed to a flame or heat of a predetermined temperature to form carbide. The carbide formed by such an organic material is often porous, which may thus have a heat insulating function. Therefore, when the composition or the fire extinguishing device has been exposed to heat generation, ignition or explosion, the organic material may form appropriate carbide to exhibit the heat insulating function. For example, in the case where the organic material is applied together with the gas-generating material, the porous carbide may be formed more effectively through action of gas generated from the gas-generating material in a process of forming carbide when the organic material has been exposed to the heat generation, ignition or explosion.

The carbonization action of the carbonizable organic material may be induced or promoted by the above-described fire extinguishing agent. That is, the fire extinguishing agent may be decomposed at a high temperature to generate acid, salt or ion components, and these acid, salt, or ion components may promote the carbonization action of the carbonizable organic material through catalytic action.

As the carbonizable organic material, any appropriate type may be applied without special limitation if it is a material forming the carbide when exposed to heat or flame.

An example of such an organic material may be exemplified by sugars such as sorbitol or mannitol, polysaccharides such as starch or dextrin (e.g., MC (maleated cyclodexdrin) or metal salts of the MC), polyhydric alcohols such as pentaerythritol, dipentaerythritol, tripentaerythritol or THEIC (tris(hydroxyethyl)isocyanurate), celluloses, BSPPO (bi(4-methoxy-1-phospha-2,6,7-trioxabicyclo[2.2.2]-octan-1-sulfide)phenyl phosphate), lignin (alkali lignin or urea modified lignin), melamine compounds such as methylol melamine, phenol-formaldehyde resins and/or carbonizable polymer (char forming polymer) such as PA6T (poly-hexa methylene terephthalamide), and the like, but is not limited thereto.

A substance representatively applicable as the carbonizable organic material is starch. The starch is relatively easy to obtain, which may form the appropriate carbide when exposed to heat or flame.

In order that the carbide is efficiently formed and the formed carbide effectively exerts the desired fire extinguishing or insulating effect, the type of starch may be adjusted.

For example, as the starch, starch containing amylose and amylopectin, the ratio of which is adjusted to an appropriate level, may be used. As is known, amylopectin and amylose are types of polysaccharides mainly found in plants, and the starch of polysaccharides is composed of amylose and amylopectin. The amylose is composed of glucose molecules linked by $\alpha$ (1→4) glycosidic bonds and has a linear chain structure, whereas the amylopectin has relatively short and highly branched chains. The amylose crystallizes relatively easily compared to the amylopectin, and the amylopectin has a relatively higher solubility in water than the amylose.

The desired composition can be provided more efficiently by using starch that amylose and amylopectin having the characteristics are present in an appropriate ratio.

For example, in the starch containing amylose and amylopectin, the lower limit of the weight ratio of the amylopectin relative to 100 parts by weight of the amylose may be 150 parts by weight, 200 parts by weight, 250 parts by weight, or 300 parts by weight or so, and the upper limit thereof may be 900 parts by weight, 850 parts by weight, 800 parts by weight, 750 parts by weight, 700 parts by weight, 650 parts by weight, 600 parts by weight, 550 parts by weight, 500 parts by weight, 450 parts by weight, 400 parts by weight, 350 parts by weight, or 300 parts by weight or so. The ratio may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The ratio of the amylose and amylopectin may be measured according to the manner described in "8. Measurement of amylopectin and amylose contents" of Example sections in this specification.

As the starch, starch having a molecular weight, for example, a weight average molecular weight (Mw) within a predetermined range, may be used. For example, the lower limit of the weight average molecular weight of the starch may be 200,000 g/mol, 250,000 g/mol, 300,000 g/mol, 350,000 g/mol, 400,000 g/mol, 450,000 g/mol, 500,000 g/mol, 550,000 g/mol, 600,000 g/mol, 650,000 g/mol, 700,000 g/mol, 750,000 g/mol, 800,000 g/mol, 850,000 g/mol, 900,000 g/mol, 950,000 g/mol, 1,000,000 g/mol, 1,500,000 g/mol, 2,000,000 g/mol, 2,500,000 g/mol, 3,000,000 g/mol, 3,500,000 g/mol, 4,000,000 g/mol, 4,500,000 g/mol, 5,000,000 g/mol, 5,500,000 g/mol, 6,000,000 g/mol, 6,500,000 g/mol, 7,000,000 g/mol, 7,500,000 g/mol, 8,000,000 g/mol, 8,500,000 g/mol, 9,000,000 g/mol, 9,500,000 g/mol, 10,000,000 g/mol, 20,000,000 g/mol, 30,00 0,000 g/mol, 40,000,000 g/mol, or 50,000,000 g/mol or so, and the upper limit thereof may be 1,000,000,000 /mol, 900,000,000 /mol, 800,000,000 /mol, 700,000,000 /mol, 600,000,000 /mol, 500,000,000 /mol, 400,000,000 /mol, 300,000,000 /mol, 200,000,000 /mol, 150,000,000 /mol, 100,000,000 /mol, 90,000,000 /mol, 80,000,000 /mol, 70,000,000 /mol, or 60,000,000 /mol or so. The molecular weight may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The starch having such a molecular weight (Mw) can more effectively form carbides having a desired function (for example, an insulating function) when exposed to heat or flame. The molecular weight may be measured in the manner described in "7. Molecular weight measurement" of Example sections in this specification.

In the case where it is included, the lower limit of the weight ratio of the carbonizable organic material relative to 100 parts by weight of the vaporizable substance may be 0.01 parts by weight, 0.5 parts by weight, 1 part by weight, 2 parts by weight, 3 parts by weight, 4 parts by weight, 5 parts by weight, 6 parts by weight, 7 parts by weight, 8 parts by weight, 9 parts by weight, 9.5 parts by weight, or 10 parts by weight or so, and the upper limit thereof may be 50 parts by weight, 45 parts by weight, 40 parts by weight, 35 parts by weight, 30 parts by weight, 29 parts by weight, 28 parts by weight, 27 parts by weight, 26 parts by weight, 25 parts by weight, 24 parts by weight, 23 parts by weight, 22 parts by weight, 21 parts by weight, 20 parts by weight, 19 parts by weight, 18 parts by weight, 17 parts by weight, 16 parts by weight, 15 parts by weight, 14 parts by weight, 13 parts by weight, 12 parts by weight, 11 parts by weight, 10 parts by weight, 9 parts by weight, 8 parts by weight, 7 parts by weight, 6 parts by weight, or 5 parts by weight or so. The ratio may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The carbonizable organic material contained in such a ratio can effectively form carbides in the composition as needed, and can ensure that the composition has excellent handleability and storage stability in whole.

The composition or the sealed space of the fire extinguishing device may also comprise a gas-generating material as an additional component. The gas-generating material that may be included in the composition is a material that generates gas when exposed to heat or flame. The gas thus generated may function to directly extinguish the heat or flame, and may also perform, in a process of forming a carbide by the carbonizable organic material, a function of making the carbide more porous.

The action of such a gas-generating material may be induced or promoted by the above-described fire extinguishing agent. That is, the fire extinguishing agent may be decomposed at a high temperature to generate acid, salt, or ion components, and such acid, salt, or ion components may promote the gas generation of the gas-generating material.

The type of gas generated by the gas-generating material is not particularly limited if it is a non-flammable gas, which may be, for example, nitrogen gas, carbon dioxide, and/or water vapor, and the like.

Various materials generating the gas are known. For example, the material generating nitrogen gas may be exemplified by melamine, guanidine, urea, melamine pyrophosphate, dicyandiamide, guanylurea phosphate, and glycine, and the like; the material generating carbon dioxide may be exemplified by potassium bicarbonate, sodium bicarbonate, calcium bicarbonate, and magnesium bicarbonate, and the like; and the material generating water vapor may be exemplified by calcium hydroxide, magnesium dihydroxide, and aluminum trihydroxide, and the like, but the material which is applicable in the present application is not limited thereto.

As the gas-generating material, one or a mixture of two or more selected from the above-described types may be used.

To generate an appropriate effect, as the gas-generating material, a material generating nitrogen gas may be used, and for example, melamine, guanidine, urea, melamine pyrophosphate, and/or guanylurea phosphate, and the like may be used. Such materials are advantageous in terms of the fact that especially, they effectively exert a foaming effect on the carbide during the process in which the carbonizable organic material forms the carbide, thereby effectively forming the desired porous carbide.

In the case where it is included, the lower limit of the weight ratio of the gas-generating material relative to 100 parts by weight of the vaporizable substance may be 0.01 parts by weight, 0.5 parts by weight, 1 part by weight, 2 parts by weight, 3 parts by weight, 4 parts by weight, 5 parts by weight, 6 parts by weight, 7 parts by weight, 8 parts by weight, 9 parts by weight, 9.5 parts by weight, 10 parts by weight, 11 parts by weight, 12 parts by weight, 15 parts by weight, 20 parts by weight, 25 parts by weight, 30 parts by weight, 35 parts by weight, or 40 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, 20 parts by weight, 15 parts by weight, 10 parts by weight, 8 parts by weight, or 7 parts by weight or so. The ratio may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The gas-generating material included in such a ratio can exert an effective suppression effect on heat or flame and a formation effect of porous carbide as needed, and can ensure that the composition has excellent handleability and storage stability in whole.

The composition may comprise a water-absorbing polymer as an additional component.

The water-absorbing polymer is a polymer having a property capable of absorbing water. In one example, the water-absorbing polymer may be a so-called hydrogel polymer or hydrogel, which is generally defined as a crosslinked hydrophilic polymer. Such a polymer is also known as an SAP (Super Absorbent Polymer).

The water-absorbing polymer is a material that can absorb moisture tens to thousands of times its own weight. Such a material allows the composition to exist in a gel state in whole, thereby performing the function of ensuring handleability and storage stability.

The type of water-absorbing polymer is not particularly limited, and any polymer which is generally applicable as the SAP may be used without limitation.

Usually, a polyacrylate-based vinyl polymer is used as the material. Here, the polyacrylate-based polymer is a polymer manufactured from an acrylate-based monomer, and if necessary, other comonomers may be further used to form the polymer.

The water-absorbing properties may be adjusted so that the water-absorbing polymer exhibits suitable properties.

For example, the lower limit of the centrifuge retention capacity (CRC) of the water-absorbing polymer according to EDANA (European Disposables and Nonwovens Association) method WSP 241.3 may be 12 g/g, 13 g/g, 14 g/g, 15 g/ g, 16 g/g, 17 g/g, 18 g/g, 19 g/g, 20 g/g, 21 g/g, 22 g/g, 23 g/g, 24 g/g, 25 g/ g, 26 g/g, 27 g/g, 28 g/g, 29 g/g, 30 g/g, 31 g/g, 32 g/g, or 33 g/g or so, and the upper limit thereof may be 60 g/g, 55 g/g, 50 g/g, 45 g/g, 40 g/g, or 35 g/g or so. The retention capacity (CRC) may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The centrifuge retention capacity (CRC) may be evaluated in the manner described in "5. CRC (Centrifuge Retention Capacity)" of Example sections in this specification.

For example, the lower limit of the absorption under pressure (AUP) of the water-absorbing polymer at 0.3 psi according to EDANA (European Disposables and Nonwovens Association) method WSP 242.3 may be 4 g/g, 6 g/g, 8 g/g, 10 g/g, 12 g/g, 14 g/g, 16 g/g, 18 g/g, 20 g/g, 22 g/g, 24 g/g, 26 g/g, 27 g/g, or 28 g/g or so, and the upper limit thereof may be 40 g/g, 38 g/g, 36 g/g, 34 g/g, 32 g/g, or 30 g/g or so. The absorption (AUP) may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The absorption (AUP) may be evaluated in the manner described in "6. AUP (Absorption Under Pressure)" of Example sections in this specification.

The water-absorbing polymer having the above absorption can be combined with other components of the composition to exhibit the desired properties.

In one example, the water-absorbing polymer may be a particulate polymer, where the lower limit of the average particle diameter of the water-absorbing polymer may be 10 $\mu$m, 50 $\mu$m, 100 $\mu$m, or 140 $\mu$m or so, and the upper limit thereof may be 1000 $\mu$m, 950 $\mu$m, 900 $\mu$m, 850 $\mu$m, 800 $\mu$m, 750 $\mu$m, 700 $\mu$m, 650 $\mu$m, 600 $\mu$m, 550 $\mu$m, 500 $\mu$m, 450 $\mu$m, 400 $\mu$m, 350 $\mu$m, 300 $\mu$m, 250 $\mu$m, or 200 $\mu$m or so. The average particle diameter may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The above average particle diameter may be measured according to the method specified in NWSP 210.0.R2(15).

In the case where it is included, the lower limit of the weight ratio of the water-absorbing polymer relative to 100 parts by weight of the vaporizable substance may be 0.01 parts by weight, 0.5 parts by weight, 1 part by weight, 2 parts by weight, 3 parts by weight, 4 parts by weight, 5 parts by weight, 6 parts by weight, 7 parts by weight, 8 parts by weight, or 9 parts by weight or so, and the upper limit thereof may be 50 parts by weight, 45 parts by weight, 40 parts by weight, 35 parts by weight, 30 parts by weight, 29 parts by weight, 28 parts by weight, 27 parts by weight, 26 parts by weight, 25 parts by weight, 24 parts by weight, 23 parts by weight, 22 parts by weight, 21 parts by weight, 20 parts by weight, 19 parts by weight, 18 parts by weight, 17 parts by weight, 16 parts by weight, 15 parts by weight, 14 parts by weight, 13 parts by weight, 12 parts by weight, 11 parts by weight, 10 parts by weight, 9 parts by weight, 8 parts by weight, 7 parts by weight, 6 parts by weight, 5 parts by weight, 4 parts by weight, 3 parts by weight, or 2 parts by weight or so. The ratio may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

The composition comprises the above components, and may further comprise additional components, if necessary.

For example, the composition may further comprise a buffer.

Referring to Figs. 2 and 3, in an abnormal state, heat may be applied to the fire extinguishing device, and additionally, momentary high pressure may also be applied. For example, in a structure such as Fig. 1, if the battery cells (12, 13, 14, 15) adjacent to the fire extinguishing device (100) explode or rapidly expand, high pressure is applied to the fire extinguishing device (100). If the fire extinguishing device (100) is momentarily contracted by the pressure thus applied, the vaporizable material existing inside may be discharged to the outside before it is vaporized, and such discharge may reduce the efficiency of the fire extinguishing action.

The buffer may perform a buffer action for the momentarily applied pressure as described above, and as a result, it may enable so that the vaporization of the vaporizable material inside sufficiently occurs.

In addition, the buffer also plays a role in carrying the vaporizable material optionally. That is, if the buffer has porosity as described below, or is in the form of woven fabric, nonwoven fabric, or felt, the buffer may exhibit the characteristic of absorbing or carrying the vaporizable material.

The type of the buffer is not particularly limited if it can perform the action, and for example, one having an appropriate density and/or thermal decomposition temperature may be used.

For example, the upper limit of the density of the buffer may be 1.5, 1.3, 1.1, 0.9, 0.7, 0.5, 0.3, 0.1, 0.08, 0.06, or 0.04 or so, and the lower limit thereof may be 0.001, 0.005, 0.01, 0.05, 0.1, or 0.15 or so. The density may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The unit of the density is g/cm$^3$.

For example, the upper limit of the thermal decomposition temperature of the buffer may be 2,000°C, 1,800°C, 1,600°C, 1,400°C, 1,200°C, 1,000°C, 900°C, 800°C, 600°C, 500°C, or 400°C or so, and the lower limit thereof may be 150°C, 200°C, 250°C, 300°C, 350°C, 400°C, 450°C, 500°C, 550°C, 600°C, 650°C, 700°C, 750°C, or 800°C or so. The thermal decomposition temperature may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The method of measuring the thermal decomposition temperature is described in "11. Thermal decomposition temperature" of Example sections in this specification.

As the buffer, any known material may be used without special limitation if it has the density and/or thermal decomposition temperature. For example, as the buffer, known glass fibers, ceramic fibers and/or mineral fibers known as insulating materials may be used. Such inorganic fibers may be in the form of porous films, porous sheets, porous foils, wools, or woven or non-woven fabrics such as a form of felts.

In addition, as the buffer, for example, inorganic foams such as various metal foams, woven fabrics, nonwoven fabrics, or felts made of glass wool, mineral wool, glass fibers, or mineral fibers, or foams, or woven fabrics, nonwoven fabrics, or felts formed of carbonizable organic materials to be described below may also be used.

As the buffer, any one or a combination of two or more selected from the various types may be used.

The size of the buffer is determined according to the size of the sealed space, which is not particularly limited. For example, when the buffer is in the form of porous films, porous sheets, porous foils, wools, woven fabrics, nonwoven fabrics, or felts as described above, the lower limit of the thickness of the relevant buffer may be 0.1 mm, 0.5 mm, 1 mm, 1.5 mm, 2 mm, or 2.5 mm or so, and the upper limit thereof may be 20 mm, 15 mm, 10 mm, 9 mm, 8 mm, 7 mm, 6 mm, 5 mm, 4 mm, or 3 mm or so. The thickness may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

The composition may exhibit unique physical properties through a combination of the above-described components.

For example, the composition may exhibit a controlled freezing point overall. For example, the lower limit of the freezing point of the composition may be -50°C, -45°C, -40°C, -35°C, -30°C, -25°C, -20°C, -15°C, or -10°C or so, and the upper limit thereof may be 10°C, 8°C, 6°C, 4°C, 2°C, 0°C, -5°C, -10°C, -15°C, -20°C, -25°C, -30°C, -35°C, or -40°C or so. The freezing point may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

The composition may have a controlled viscosity and/or thixotropic index.

For example, the lower limit of the viscosity of the composition may be 30,000 cP, 40,000 cP, 50,000 cP, 60,000 cP, 70,000 cP, 80,000 cP, 90,000 cP, 100,000 cP, 110,000 cP, 120,000 cP, 130,000 cP, 140,000 cP, 150,000 cP, or 155,000 cP or so, and the upper limit thereof may be 600,000 cP, 550,000 cP, 500,000 cP, 450,000 cP, 400,000 cP, 350,000 cP, 300,000 cP, 250,000 cP, 200,000 cP, 150,000 cP, 100,000 cP, 90,000 cP, 80,000 cP, or 70,000 cP or so. The viscosity may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. Such a viscosity is a value measured at room temperature (about 25°C) and a rotation speed of 0.5 rpm.

For example, the lower limit of the thixotropic index of the composition may be 2, 4, 6, 8, 10, or 10.5 or so, and the upper limit thereof may be 20, 18, 16, 14, 12, 10, 8, or 6 or so. The thixotropic index may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. Such a thixotropic index is a value obtained by dividing the viscosity measured at room temperature (about 25°C) and a rotation speed of 0.5 rpm by the viscosity measured at room temperature (about 25°C) and a rotation speed of 5 rpm.

A composition having such viscosity and/or thixotropic index may exhibit excellent handleability and storage stability, and the like.

The composition may exhibit certain latent heat characteristics. Latent heat is usually defined as a heat quantity required for any material to cause a state change (phase transition) without any temperature change. However, when the composition exhibits the latent heat, it does not necessarily have to undergo the state change in whole. The latent heat may be generated in the process of changing the state of at least a part of the composition, or the components included in the composition.

Here, the matter that the composition exhibits latent heat means that in a DSC (Differential Scanning Calorimeter) analysis, the composition exhibits an endothermic peak in a predetermined temperature range. The method of conducting the DSC is described in "4. Measurement of latent heat" of Example sections. The process in which the composition exhibits the latent heat may be an isothermal process or a process similar thereto. Therefore, the composition can be applied to a product that generates heat to control the heat while maintaining the temperature of the product uniformly, and can minimize or prevent the effect of abnormal heat generation, explosion and/or ignition occurring in one product on other adjacent products.

The lower limit of the latent heat exhibited by the above composition may be, for example, 500 J/g, 550 J/g, 600 J/g, 650 J/g, 700 J/g, 750 J/g, 800 J/g, 850 J/g, 900 J/g, 950 J/g, 1000 J/g, 1100 J/g, 1200 J/g, or 1300 J/g or so, and the upper limit thereof may be 3000 J/g, 2800 J/g, 2600 J/g, 2400 J/g, 2200 J/g, 2000 J/g, 1800 J/g, 1600 J/g, 1400 J/g, 1200 J/g, 1000 J/g, or 900 J/g or so. The latent heat may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits.

The lower limit of the range of an on-set temperature at which the composition begins to exhibit the latent heat may be, for example, 50°C, 55°C, 60°C, 65°C, 70°C, 75°C, 80°C, 85°C, 90°C, or 95°C or so, and the upper limit thereof may be 200°C, 180°C, 160°C, 140°C, 120°C, 100°C, 90°C, or 80°C or so. The on-set temperature may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The on-set temperature means the temperature of the left on-set point of the endothermic peak section of the DSC analysis.

The lower limit of the temperature section representing the latent heat of the composition may be, for example, 50°C, 55°C, 60°C, 65°C, 70°C, 75°C, 80°C, 85°C, 90°C, 95°C, 100°C, 110°C, 120°C, 130°C, 140°C, 150°C, 160°C, 170°C, or 180°C or so, and the upper limit thereof may be 300°C, 280°C, 260°C, 240°C, 220°C, 200°C, 180°C, or 160°C or so. The temperature section range may be within a range of less than or equal to, or less than any one of the above-described upper limits; or within a range of more than or equal to, or more than any one of the above-described lower limits; or within a range of less than or equal to, or less than any one of the above-described upper limits while being within a range of more than or equal to, or more than any one of the above-described lower limits. The temperature section is a value obtained by subtracting the temperature of the left on-set point from the temperature of the right on-set point in the endothermic peak section of the DSC analysis.

Through the above characteristics, the composition can be applied to various uses to effectively respond to heat generation, ignition, and/or explosion occurring in each use.

The freezing point, viscosity, thixotropic index, and latent heat characteristics of the composition as described above can be secured through a combination of the components of each composition as described above.

In addition, the composition may also further comprise various types of known additives if the above-described physical properties are not impaired.

For example, the above-described fire extinguishing device may be manufactured by loading the above-described vaporizable substance or the composition into the sealed space inside the above-described case.

The present specification also discloses electronic equipment or devices to which the fire extinguishing device is applied.

The type of electronic equipment or device is not particularly limited. For example, the composition or fire extinguishing device may be applied to equipment or devices, and the like, where there is a risk of abnormal heat generation, ignition and/or explosion in driving, maintenance and/or storage processes, and the relevant abnormal phenomenon must be controlled.

An example of the equipment or device representatively includes a battery. Particularly, in a battery module constructed using a plurality of battery cells, it is important to prevent abnormal heat generation, ignition and/or explosion occurring in one battery cell from spreading to other adjacent battery cells.

Therefore, the present specification discloses a battery module or a battery pack comprising the fire extinguishing device, and the like.

Such a battery module, and the like may basically comprise a plurality of battery cells; and the fire extinguishing device disposed between the battery cells.

If the fire extinguishing device is applied, the specific configuration of the battery module, and the like, for example, the type of battery cell, and the like, is not particularly limited, and known materials may be applied. For example, a known pouch-shaped, rectangle-shaped, or cylindrical battery cell may be used as the battery cell.

The manufacturing method of the battery module is not particularly limited, and for example, as described above, a method of manufacturing a fire extinguishing device as in the form of a battery cell, and then placing the fire extinguishing device at a required position during the manufacturing process of the battery module, and the like may be used.

**Advantageous Effects**

The present specification discloses a composition, a fire extinguishing device, and a use thereof. The composition and the fire extinguishing device can be applied to a product with a possibility of abnormal heat generation, ignition, and/or explosion during drive, storage, and/or maintenance processes to effectively respond to the heat generation, ignition, and explosion. The composition and the fire extinguishing device can be applied, for example, to an article comprising a plurality of the products to respond to abnormal heat generation, explosion, and/or ignition occurring in any one product, and can prevent propagation of such heat generation, explosion, and/or ignition to other adjacent products. The composition and the fire extinguishing device also have excellent handleability and storage stability. The present specification also discloses a use of the composition and the fire extinguishing device.

**Description of Drawings**

Fig. 1 is an exemplary cross-sectional diagram of a battery module to which a fire extinguishing device is applied.

Fig. 2 is an exemplary diagram for explaining an operating principle of a fire extinguishing device.

Fig. 3 is an exemplary diagram for explaining an operating principle of a fire extinguishing device.

Fig. 4 is a diagram for explaining a process of manufacturing a fire extinguishing device in an example.

Fig. 5 is a diagram for explaining a process of manufacturing a fire extinguishing device in an example.

Fig. 6 is a diagram showing one exemplary form of a case applied in an example.

**Mode for Invention**

Hereinafter, the composition and the fire extinguishing device, and the like will be specifically explained with reference to examples, but the scope of the composition and the fire extinguishing device, and the like is not limited by the following examples.

**1. Convection test**

Fire extinguishing devices of Examples or Comparative Examples are each positioned between two aluminum plates, and an insulating material is laminated on one of the two aluminum plates, thereby manufacturing a laminate in which the insulating material, the aluminum plate, the fire extinguishing device, and the aluminum plate are sequentially laminated. As the aluminum plate, a plate having a thickness of about 3 mm or so was used, and as the insulating material, mineral wool (KCC, Insulating Board No. 1) having a thickness of about 2 mm or so was used. Subsequently, both sides of the laminate were pressed with a jig at a pressure of about 350 kPa and fixed. Subsequently, a temperature sensor (k-type thermocoupler, Fluke's IR thermometers 566 model) was positioned on the insulating material side of the laminate, and the temperature was measured with the temperature sensor while applying a flame toward the aluminum plate on the opposite side. The flame was applied at a distance spaced about 2 inches from the aluminum plate using two butane gases (can type butane gas with a capacity of 220 g (unused product)) and torches. The temperature was measured with the temperature sensor while applying the flame for 5 minutes or so, and it was evaluated according to the following criteria.

<Evaluation criteria>

PASS: When the temperature sensor's measurement temperature remains less than 200°C

NG: When a temperature above 200°C is measured from the temperature sensor, or it is observed for the aluminum plate to be melted

**2. Chain ignition test**

Rectangular batteries were disposed side by side with an interval of about 3 mm, and a fire extinguishing device comprising a composition was placed therebetween. As the rectangular battery, CATL's product (120 Ah, 3.2 V, size = thickness × breadth × width = 48 × 174 × 165) was used, and applied to the test in a 100% charged state. In the above arrangement, battery ignition was induced in one rectangular battery according to SAE J2464:2009 standard, and chain ignition in the other cell was checked. The ignition of the battery was caused by penetrating a nail with a diameter of about 5 mm into the rectangular battery at a speed of 25 mm/sec (Nail Penetration method).

<Evaluation criteria>

PASS: When no ignition occurs in the other battery cell other than the battery cell through which the nail has penetrated

NG: When ignition occurs in the other battery cell other than the battery cell through which the nail has penetrated

**3. Storage stability evaluation**

A fire extinguishing device was stored in an oven at a temperature of about 35°C or so for 1,000 hours, and the weight change before and after storage in the oven was measured. When the weight change before and after storage was 1% or more, it was evaluated as NG, and when it was less than 1% or there was no weight change, it was evaluated as PASS.

**4. Measurement of latent heat**

Each composition of Examples or Comparative Examples was collected in an amount of about 3 to 5 mg or so, and loaded into a measuring device. As the measuring device, a DSC (Differential Scanning Calorimeter) device (TA instrument company, Q200 model) was used. Upon evaluating latent heat, the temperature section was set as 25°C to 300°C. Endothermic peaks were measured while increasing the temperature from 25°C to 300°C at a rate of about 20°C/min. The left on-set point and right on-set point of the endothermic peak section were designated as the start and end of endotherm, and the latent heat (unit: J/g) was calculated by integrating the relevant section

**5. CRC (Centrifuge Retention Capacity)**

A CRC was measured according to EDANA WSP 241.3. About 0.2 g (W0) of a water-absorbing polymer was placed in a nonwoven envelope, sealed, and then submerged in a physiological saline solution at room temperature. As the physiological saline solution, an aqueous NaCl solution with a concentration of 0.9 weight% was used. The state was maintained for 30 minutes or so, moisture was removed from the envelope for 3 minutes at a condition of 250 G using a centrifuge, and then the mass (g, W2) of the envelope was measured.
The same operation was performed on the same nonwoven envelope without any water-absorbing polymer, and the mass (g, W1) was measured.
The CRC (g/g) was calculated by substituting the measurement results into Equation A below.
The evaluation was conducted under a constant temperature and humidity condition ($23 \pm 1°C$, relative humidity: $50 \pm 10\%$).

[Equation A]

$$CRC\ (g/g) = \{[W2(g) - W1(g)]/W0(g)\} - 1$$

**6. AUP (Absorption Under Pressure)**

An AUP was measured according to EDANA method WSP 242.3. A 400-mesh stainless steel wire net was mounted on the bottom of a plastic cylinder with an inner diameter of about 60 mm, and 0.0 g (W0) (0.90 g) of a water-absorbing polymer was evenly sprayed on the wire net, and then a piston capable of evenly imparting a load of 0.3 psi was installed thereon. The piston had an outer diameter slightly smaller than 60 mm, had no gap with the inner wall of the cylinder, and was installed so that it could move up and down. The weight (g, W3) of the device was measured.

A glass filter with a diameter and a thickness of 90 mm and 5 mm, respectively, was placed inside a Petro dish with a diameter of 150 mm, and a physiological saline solution was added so that it was at the same level as the upper surface of the glass filter. As the physiological saline solution, an aqueous NaCl solution with a concentration of 0.9 weight% was used. One sheet of filter paper with a diameter of 90mm was placed thereon. The measuring device was placed on the filter paper, and the physiological saline solution was absorbed for 1 hour under a load of 0.3 psi. Thereafter, the measuring device was lifted, and its weight (g, W4) was measured.

The AUP (g/g) was evaluated by substituting the obtained values into Equation B below.

The evaluation was conducted under a constant temperature and humidity condition ($23 \pm 1°C$, relative humidity: $50 \pm 10\%$).

[Equation B]

$$AUP(g/g) = [W4(g) - W3(g)]/W0(g)$$

**7. Molecular weight measurement**

A molecular weight of starch was evaluated in the following manner.

(1) Preparation of mobile phase

A mobile phase A was prepared by filtering 1000 mL of a 150 mM $NaNO_3$ aqueous solution containing 0.02 weight% of $NaN_3$ using a solvent clarification system (Millipore Millisolve Kit, MilliporeSigma).

(2) Preparation of sample solution

A sample intended to be measured was collected in an amount of 25 mg, and mixed with 5 mL of a 150 mM $NaNO_3$ aqueous solution containing 0.02 weight% of $NaN_3$, and then a sample solution was prepared by heating the mixture at 80°C for 20 hours, and then filtering it with a 0.4$\mu$m Nylon Syringe Filter.

(3) GPC (Gel Permeation Chromatography)/MALS (Multi-Anglue Light Scattering Detection) conditions

The molecular weight was evaluated using the sample solution and the mobile phase A in the following manner.

Measuring instrument: Agilent GPC (Agilent 1200 series, U.S.)

Stationary phase: connecting Shodex OH-Pak 804 column and Shodex OH-Pak 80 column

Mobile phase: A; 0.02% $NaN_3$, 150 mM $NaNO_3$ aqueous solution = 100 (v/v %)

Flow rate: 0.4 mL/min

Stationary phase temperature: 25°C

Injected amount: 100 $\mu$l (0.45 $\mu$m filtered)

Analysis time: 120 minutes

**8. Measurement of amylopectin and amylose contents**

Contents of amylopectin and amylose in starch were evaluated according to the method described in a paper (Potato Research 31 (1988) 241-246).

First, a sample was prepared by dissolving about 5 mg of starch in about 1 mL of sterile water (Step 1), and heated to 95°C for about 15 minutes in a constant temperature water bath (Step 2).

Subsequently, about 20 $\mu$l of the sample was placed in a cuvette (Step 3), and about 980 $\mu$l of an iodine solution was added thereto and mixed (Step 4).

Subsequently, absorbance of the sample mixed with the iodine solution at wavelengths of 525 nm and 700 nm was measured and recorded, respectively (Step 5). The absorbance was measured using KLAB's OPTIZEN POP model.

About 20 $\mu$l of water was placed in another cuvette, 980 $\mu$l of the iodine solution was added thereto, and mixed (Step 6). For the solution of Step 6, absorbance at wavelengths of 525 nm and 700 nm was measured and recorded, respectively, in the same manner as in Step 5 (Step 7).

The absorbance obtained in Step 7 was subtracted from the absorbance obtained in Step 5, and the ratio (%) of amylose was confirmed according to Equation C below (Step 8).

[Equation C]

$$PA = 3.039 - \frac{7.154 \times \frac{OD_{700}}{OD_{525}}}{3.048 \times \frac{OD_{700}}{OD_{525}}} - 19.192$$

In Equation C, PA is the ratio (%) of amylose, $OD_{700}$ is the value obtained by subtracting the absorbance at a wavelength of 700 nm measured in Step 7 from the absorbance at a wavelength of 700 nm measured in Step 5, and $OD_{525}$ is the value obtained by subtracting the absorbance at a wavelength of 525 nm measured in Step 7 from the absorbance at a wavelength of 525 nm measured in Step 5.

**9. WVTR (Water Vapor Transmission Rate) evaluation**

A WVTR (Water Vapor Transmission Rate) of a case was evaluated according to ASTM F1249 standard under conditions of 38°C and 100% relative humidity.

**10. Solubility evaluation**

Solubility was evaluated based on ASTM E1148-02 standard. The solubility was identified by evaluating the maximum amount of a sample dissolved in 100 g of a vaporizable substance (water) at 0°C or room temperature (about 25°C) according to the standard.

**11. Thermal decomposition temperature**

A thermal decomposition temperature was identified by TGA (Thermogravimetric Analysis). Using Mettler-Toledo's TGA e850 equipment, a temperature of a sample was increased from about 20°C at a rate of 5°C/min in an N2 flow atmosphere, and simultaneously the point where the weight loss was 5% or more was defined as the thermal decomposition temperature.

**12. Flammability evaluation**

Flammability of a freezing point adjuster was evaluated according to ASTM D93 standard. A sample (ignition source) was placed in a 100 mL brass test cup in an amount of about 90 vol% or so of the cup, stirred at about 100 times/min, and a diameter of the ignition source was set to about 3.2 mm to 4.8 mm, whereby a flash point was evaluated while increasing the temperature at a rate of 5°C/min. Upon the evaluation, in the case where the sample did not ignite but vaporized, the relevant sample was evaluated as being non-flammable, and if it ignited, the temperature at the time of ignition was determined as the flash point.

### 13. Evaluation of toxic gas generation

Generation of toxic gas was evaluated using length-of-stain colorimetric dosimeters according to ASTM D4599-21 standard. The length-of-stain colorimetric dosimeters are tubes that can measure concentrations according to colors, and the measurement tube is designated for each toxic gas. A gas sample generated from a target substance was collected for about 1 minute or so and quantified. After the sample was injected into the open end of the length-of-stain colorimetric dosimeters using a 100ml syringe, and then maintained for 8 hours or so, the concentration was measured for each gas. The toxic gases measured using the method were chlorine gas, ammonia gas, and hydrofluoric acid gas.

### 14. Presence of ignition quality

A fire extinguishing composition was placed in an aluminum can, and an ignition quality was evaluated. As the aluminum can, one manufactured in the form of an open top using an aluminum foil with a thickness of about 3 mm or so was used. The horizontal and vertical lengths of the can were 9 cm and 12 cm or so, respectively, and the internal volume was about 32.4 cm$^3$ or so. The composition was filled inside the can, and a flame was applied vertically at an interval of about 1 inch or so to one surface of the side surfaces of the can in a state where the top of the can was opened. The flame was applied using butane gas (can type butane gas with a capacity of 220 g (unused product)) and a torch. The ignition quality was evaluated by observing whether the flame occurred at the open top while applying the flame for 5 minutes or so.

### 15. Thermal conductivity evaluation

A thermal conductivity was evaluated at 20°C using a measuring device (Hot Disk, TPS2200) according to ISO22007-2 standard.

### Example 1.

### Fire extinguishing composition

Water (W), monobasic ammonium phosphate (N) ($NH_4H_2PO_4$), starch (S), and melamine (M) were mixed in a weight ratio of 100:22:6:6 (W: N: S: M) to prepare a first mixture. The mixing was performed at room temperature (about 25°C) under a mixing condition of 500 rpm for 1 minute or so. The monobasic ammonium phosphate (N) ($NH_4H_2PO_4$) has solubility of about 29 g or so in water at 25°C. Corn starch was used as the starch, wherein starch having a weight average molecular weight of about 51,000,000 g/mol or so and a weight ratio (amylose: amylopectin) of amylose and amylopectin of about 25:75 or so was used. Subsequently, a water-absorbing polymer (SAP) was additionally mixed into the first mixture to prepare a fire extinguishing composition. The mixing of the water-absorbing polymer was performed by mixing the first mixture and the water-absorbing polymer, and mixing them at room temperature (about 25°C) under a mixing condition of 500 rpm for 2 hours or so. The mixing was performed so that the weight ratio (W: P) of the water (W) and the water-absorbing polymer (P) of the mixture was about 100:5 or so. As the water-absorbing polymer, LG Chemical's GS-803ND product was used, which was applied to a size in a range of about 150 μm to 850 μm or so through pulverizing and classification processes. The CRC (Centrifuge Retention Capacity) of such a water-absorbing polymers was about 33.5 g/g or so, and the AUP (Absorption Under Pressure) was about 28.1 g/g or so. The latent heat of the fire extinguishing composition was about 1615 J/g or so.

### Fire extinguishing device

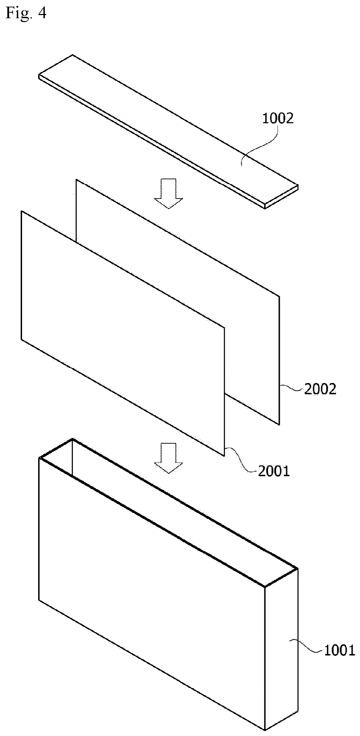

The composition was placed inside a can (case) made of an aluminum material used for manufacturing a rectangular battery, and the opening was sealed to manufacture a fire extinguishing device. The can used for the rectangular battery had a WVTR of about 0 g/m$^2$·day or so. As shown in Fig. 4, two thermally conductive layers (2001, 2002) were inserted into the inside of the aluminum can (1001), and the composition was injected therebetween, and then the cover (1002) was covered to manufacture a fire extinguishing device. When manufacturing the fire extinguishing device, the composition was injected so that at least 90% of the volume of the empty space inside the can was filled with the composition. As the thermally conductive layer (2001, 2002), a copper film (thickness of about 15 μm) with a thermal conductivity of about 401 W/m K (based on 20°C) was used. As the rectangular battery case, a case with a width of 9 cm or so, a length of 12 cm or so, and a thickness of 3 mm or so was used.

### Example 2.

A fire extinguishing device was manufactured in the same manner as in Example 1, except that as the rectangular battery case, a case having a WVTR of about 0.11 g/m$^2$·day or so was used, and as the thermally conductive layer, an aluminum foil having a thermal conductivity of about 235 W/mK (based on 20°C) or so and a thickness of about 100 $\mu$m or so was used.

### Example 3.

### Preparation of fire extinguishing composition

Water (W), monobasic ammonium phosphate (N) ($NH_4H_2PO_4$), starch (S), and melamine (M) were mixed in a weight ratio of 100:22:10:10 (W: N: S: M) to prepare a first mixture. The mixing was performed at room temperature (about 25°C) under a mixing condition of 500 rpm for 1 minute or so. As the starch, the same one as in Example 1 was used. Subsequently, a water-absorbing polymer (SAP) was additionally mixed into the first mixture to prepare a fire extinguishing composition. The mixing of the water-absorbing polymer was performed by mixing the first mixture and the water-absorbing polymer, and mixing them at room temperature (about 25°C) under a mixing condition of 500 rpm for 2 hours or so. The mixing was performed so that the weight ratio (W: P) of the water (W) and the water-absorbing polymer (P) of the mixture was about 100:8 or so. As the water-absorbing polymer the same one as in Example 1 was used. The latent heat of the fire extinguishing composition was about 1615 J/g or so.

### Fire extinguishing device

A fire extinguishing device was manufactured in the same manner as in Example 1 using the composition, except that as the rectangular battery case, a case having a WVTR of about 0.27 g/m$^2$ day was used, and as the thermally conductive layer, a copper alloy foil having a thermal conductivity of about 138 W/mK (based on 20°C) or so and a thickness of about 150 $\mu$m or so was used.

### Example 4.

### Fire extinguishing composition

Water (W) and a freezing point adjuster (ethylene glycol (molar mass: 62.07 g/mol)) (E) were mixed in a weight ratio (W: E) of 60:40. The mixing was performed at room temperature (about 25°C) under a condition of 300 rpm for 30 minutes or so. The ethylene glycol has a flash point of about 111 °C or so, and the concentrations of chlorine gas, ammonia gas, and hydrofluoric acid gas measured according to a toxic gas evaluation method are all 0 ppm. In addition, the ethylene glycol had miscibility with water. Subsequently, the mixture was placed in a sealed container, and glass wool was placed in the sealed container, and then maintained at room temperature (about 25°C) for about 24 hours, whereby the mixture was impregnated in the glass wool (latent heat: about 1,000 J/g or more). As the glass wool, glass wool (glass wool blanket, Rosewool) having a thickness of about 2.5 mm or so, a density of about 0.03 g/cm$^3$ or so, and a thermal decomposition temperature of about 400°C or so was used.

### Fire extinguishing device

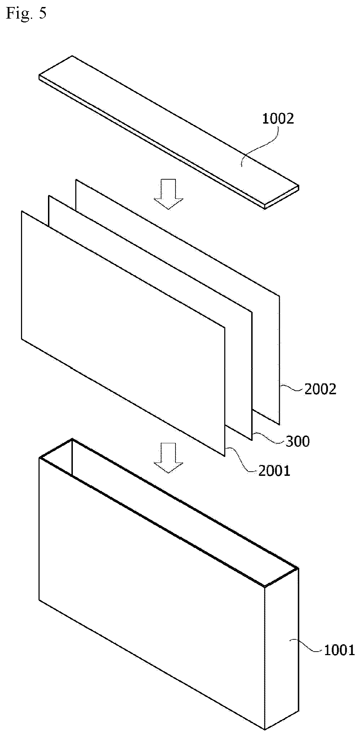

The composition was placed inside a can (case) used for manufacturing a rectangular battery, and the opening was sealed to manufacture a fire extinguishing device. The can used for the rectangular battery had a WVTR of about 0.11 g/m$^2$·day or so. As shown in Fig. 5, two thermally conductive layers (2001, 2002) were inserted into the inside of the aluminum can (1001), and the glass wool (300) impregnated with the mixture was placed between the thermally conductive layers (2001, 2002), and then a cover (1002) was covered to manufacture a fire extinguishing device. When manufacturing the fire extinguishing device, the size of the glass wool was adjusted so that at least 90% of the volume of the empty space inside the can was filled with the composition. As the thermally conductive layers (2001, 2002), a copper film (thickness of about 18 $\mu$m) having a thermal conductivity of about 405 W/m K (based on 20° C) was used. As the rectangular battery case, a case having a width of 9 cm or so, a length of 12 cm or so, and a thickness of 3 mm or so was used.

### Example 5.

**Fire extinguishing composition**

Glass wool impregnated with water and ethylene glycol was obtained in the same manner as in Example 4 (latent heat: about 1,000 J/g or more), except that water (W) and ethylene glycol (molar mass: 62.07 g/mol) (E) were mixed in a weight ratio (W: E) of 72:28.

**Fire extinguishing device**

A fire extinguishing device was manufactured in the same manner as in Example 4, except that as the rectangular battery case, a case made of an aluminum material and having a WVTR of about 0 g/m$^2$·day or so was used.

**Example 6.**

**Fire extinguishing composition**

Water (W), potassium acetate (K) (molar mass: 98.15 g/mol) (CH$_3$COOK), and starch (S) were mixed in a weight ratio (W: K: S) of 55:36:10. As the starch, corn starch having a weight average molecular weight of about 51,000,000 g/mol or so and a weight ratio (amylose: amylopectin) of amylose and amylopectin of about 25:75 or so was used. The potassium acetate, as the freezing point adjuster, was a non-flammable substance having no flash point, and was a non-toxic substance, wherein the concentrations of chlorine gas, ammonia gas, and hydrofluoric acid gas measured according to the toxic gas evaluation method were all 0 ppm. In addition, the solubility of the potassium acetate, which is the freezing point adjuster, in 100 g of water at 0°C is about 216 g or so, and the solubility in 100 g of water at 25°C is about 268.6 g or so. Subsequently, the mixture was placed in a sealed container, and additionally, mineral wool (thickness: about 2.5 mm, density: about 0.2 g/cm$^3$, thermal decomposition temperature: about 800°C) (KCC, Mineral Wool Insulating Board No. 1) was placed in the sealed container, and then maintained at room temperature (about 25°C) for about 24 hours, whereby the mixture was impregnated in the mineral wool (latent heat: about 1,000 J/g or more).

**Fire extinguishing device**

A fire extinguishing device was manufactured in the same manner as in Example 4 using, as a can (case) used for manufacturing a rectangular battery, a can having a WVTR of about 0.27 g/m$^2$·day or so. In this process, aluminum foil having a thermal conductivity of about 235 W/mK (based on 20°C) or so and a thickness of about 50 μm or so was used as the thermally conductive layer.

**Comparative Example 1.**

A fire extinguishing device was manufactured in the same manner as in Example 4, except that the thermally conductive layer was not applied.

**Comparative Example 2.**

**Fire extinguishing composition**

Water (W) and potassium acetate (K) (molar mass: 98.15 g/mol) (CH$_3$COOK) were mixed in a weight ratio (W: K) of 45:55. The potassium acetate, as a freezing point adjuster, was a non-flammable substance having no flash point, and was a non-toxic substance, wherein the concentrations of chlorine gas, ammonia gas, and hydrofluoric acid gas measured according to the toxic gas evaluation method were all 0 ppm. Subsequently, the mixture was placed in a sealed container, and mineral wool (thickness: about 2.5 mm, density: about 0.2 g/cm$^3$, thermal decomposition temperature: about 800°C) (KCC, Mineral Wool Insulating Board No. 1) was additionally placed in the sealed container, and then maintained at room temperature (about 25°C) for about 24 hours to prepare a fire extinguishing composition.

**Fire extinguishing device**

A fire extinguishing device was manufactured in the same manner as in Example 1 using, as a can (case) used for manufacturing a rectangular battery, a can having a WVTR of about 0.27 g/m$^2$·day or so. In this process, an aluminum foil having a thermal conductivity of about 235 W/mK (based on 20°C) or so and a thickness of about 50 μm or so was used as the thermally conductive layer.

## Comparative Example 3.

A fire extinguishing device was manufactured in the same manner as in Example 1, except that the thermally conductive layer was changed. Here, a manganese foil having a thermal conductivity of about 7.81 W/mK (based on 20°C) or so and a thickness of about 20 μm or so was used as the thermally conductive layer.

## Comparative Example 4.

A fire extinguishing device was manufactured in the same manner as in Example 1. However, in this case, a polyurethane foam pad, as a known insulating material, was inserted into the case instead of the fire extinguishing composition to manufacture the fire extinguishing device.

The evaluation results for the examples and comparative examples were summarized and described in Tables 1 and 2 below. In Tables 1 and 2 below, M is the molal concentration of the freezing point adjuster to the vaporizable substance (water) in the composition, and $\Delta T_f$ is a value calculated using Equation 1 ($K_f \times M \times I$). Also, in Tables 1 and 2, the water content is the weight of water included when the weight of the fire extinguishing composition of the example or comparative example is 100%, and WVTR is the WVTR (unit: g/m²·day) of the case used in the manufacture of the fire extinguishing device. In addition, in Tables 1 and 2 below, the thermal conductivity is the thermal conductivity of the thermally conductive layer applied to the fire extinguishing device (unit: W/mK) (based on 20°C).

[Table 1]

|  | Example | | | | | |
|---|---|---|---|---|---|---|
|  | 1 | 2 | 3 | 4 | 5 | 6 |
| Water content (weight%) | 71.9 | 71.9 | 66.7 | 60 | 72 | 54.5 |
| WVTR | 0 | 0.11 | 0.27 | 0.11 | 0 | 0.27 |
| Thermal conductivity | 401 | 235 | 138 | 405 | 405 | 235 |
| M | - | - | - | 10.7 | 2.8 | 6.7 |
| $\Delta T_f$ | - | - | - | 20 | 15.7 | 24.8 |
| Convection test | Pass | Pass | Pass | Pass | Pass | Pass |
| Chain ignition test | Pass | Pass | Pass | Pass | Pass | Pass |
| Storage stability | Pass | Pass | Pass | Pass | Pass | Pass |

[Table 2]

|  | Comparative Example | | | |
|---|---|---|---|---|
|  | 1 | 2 | 3 | 4 |
| Water content (weight%) | 72 | 45 | 71.9 | - |
| WVTR | 0 | 0.27 | 0 | 0 |
| Thermal conductivity | - | 235 | 7.81 | 401 |
| M | 2.8 | 12.5 | - | - |
| $\Delta T_f$ | 15.7 | 46.3 | - | - |
| Convection test | NG | NG | NG | NG |
| Chain ignition test | NG | NG | NG | NG |
| Storage stability | Pass | Pass | Pass | Pass |

From the results in Table 1, it can be confirmed that excellent results are shown in the convection test and chain ignition test by containing water in a certain content or more in the composition and introducing the thermally conductive layers into the fire extinguishing device. In addition, considering the temperature identified by the temperature sensor in the convection test, Examples 3 to 6, in which the vaporization speed was adjusted through addition of the freezing point adjuster, showed excellent effects compared to other Examples. Through the results in Table 2, it can be known that the case where the water content is high, but the thermally conductive layer does not exist (Comparative Example 1), or the thermal conductivity of the thermally conductive layer is low (Comparative Example 3), cannot obtain the intended effect, and even if the water content is low in the presence of the thermally conductive layer (Comparative Examples 2 and 4), the desired effect is not secured.

**Example 7.**

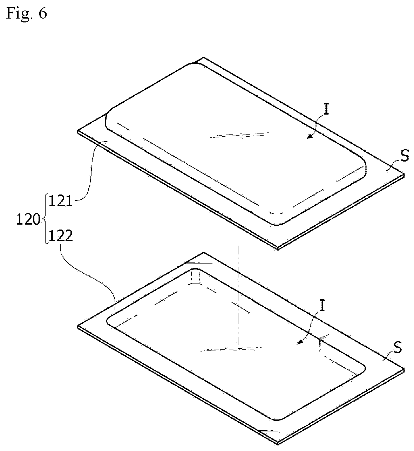

A fire extinguishing device was manufactured in the same manner as in Example 1, except that a pouch-type case was used as the case of the fire extinguishing device. The case was manufactured using an outer shell manufactured by laminating a PET (poly(ethylene terephthalate)) film (thickness: about 10 $\mu$m), an aluminum foil (thickness: about 20 $\mu$m), and a PP (polypropylene) hot melt film (thickness: about 70 $\mu$m) (melting point: about 140°C) in this order. The PET film was laminated on one side of the aluminum foil using an adhesive, and the PP hot melt film was laminated on the other side at a temperature of about 200°C to manufacture the outer shell. As shown in Fig. 6, a concave portion (I) was formed in the central portion of the outer shell to prepare an upper outer shell (121) and a lower outer shell (122), respectively. After attaching a thermally conductive layer to the concave portion (I) of the upper and lower outer shells (121, 122), a fire extinguishing composition was placed on the thermally conductive layer, and after laminating the upper and lower outer shells (121, 122), the PP hot melt films were fused to each other at the sealing portion (S), thereby manufacturing a fire extinguishing device. Thereafter, three-sided sealing portions of the four-sided sealing portions (S) were folded, whereby the unfolded sealing portion could function as a vent region. Here, the composition was injected to occupy at least 90% of the volume of the sealed space formed by the concave portion (I). The WVTR of the case was about 0 g/m²·day or so. As the thermally conductive layer, the same one as used in Example 1 was used. The case was manufactured to have a width of 9 cm or so, a length of 12 cm or so, and a thickness of 3 mm or so.

**Example 8.**

A fire extinguishing device was manufactured in the same manner as in Example 7, except that a case manufactured according to the method presented in Example 7 using an outer shell manufactured by laminating a PET (poly(ethylene terephthalate)) film (thickness: about 10 $\mu$m), a PVDC (polyvinylidene chloride) film (thickness: about 40 $\mu$m), and a PP (polypropylene) hot melt film (thickness: about 50 $\mu$m) (melting point: about 140°C) in this order was used, and an aluminum foil having a thermal conductivity of about 235 W/mK (based on 20°C) or so and a thickness of about 100 $\mu$m or so was used as the thermally conductive layer. The WVTR of the case was about 0.11 g/m²·day or so.

**Example 9.**

A case was manufactured in the same manner as in Example 7 using an outer shell manufactured by laminating a PET (poly(ethylene terephthalate)) film (thickness: about 10 $\mu$m), an EVOH (ethylene vinyl alcohol) film (thickness: about 40 $\mu$m), and a PE (polyethylene) hot melt film (thickness: about 50 $\mu$m) (melting point: about 140°C) in this order, and a fire extinguishing device was manufactured. The WVTR of the case was about 0.27 g/m²·day or so, and a copper alloy foil having a thermal conductivity of about 138 W/mK (based on 20°C) or so and a thickness of about 150 $\mu$m or so was used as the thermally conductive layer. The fire extinguishing composition used in Example 3 was used as the fire extinguishing composition.

**Example 10.**

A PET (poly(ethylene terephthalate)) film (thickness: about 10 $\mu$m), a PVDC (polyvinylidene chloride) film (thickness: about 40 $\mu$m), and a PP (polypropylene) hot melt film (thickness: about 50 $\mu$m) (melting point: about 140°C) were laminated in this order to manufacture an outer shell. As shown in Fig. 6, a concave portion (I) was formed in the central portion of the outer shell to prepare an upper outer shell (121) and a lower outer shell (122), respectively. After attaching a thermally conductive layer to the concave portion (I) of the upper and lower outer shells (121, 122), the glass wool impregnated with water, and the like in Example 4 was placed on the thermally conductive layer, and after laminating the upper and lower outer shells (121, 122), the PP hot melt films were fused to each other at the sealing portion (S), thereby manufacturing a fire extinguishing device. Thereafter, three-sided sealing portions of the four-sided sealing portions (S) were folded, whereby the unfolded sealing portion could function as a vent region. Here, the glass wool was inserted in a size occupying at least 90% of the volume of the sealed space formed by the concave portion (I). The WVTR of the case was about 0.11 g/m²·day or so. A copper film (thickness about 18 $\mu$m) having a thermal conductivity of about 405 W/m·K (based on 20°C) was used as the thermally conductive layer. The case was manufactured to have a width of 9 cm or so, a length of 12 cm or so, and a thickness of 3 mm or so.

**Example 11.**

A PET (poly(ethylene terephthalate)) film (thickness: about 10 $\mu$m), an aluminum foil (thickness: about 20 $\mu$m), and a PP (polypropylene) hot melt film (thickness: about 70 $\mu$m) (melting point: about 140°C) were laminated in this order to manufacture an outer shell. As shown in Fig. 6, a concave portion (I) was formed in the central portion of the outer shell to prepare an upper outer shell (121) and a lower outer shell (122), respectively. After attaching a thermally conductive layer to the concave portion (I) of the upper and lower outer shells (121, 122), the glass wool impregnated with water, and the like in Example 5 was placed on the thermally conductive layer, and after laminating the upper and lower outer shells (121, 122), the PP hot melt films were fused to each other at the sealing portion (S), thereby manufacturing a fire extinguishing device. Thereafter, three-sided sealing portions of the four-sided sealing portions (S) were folded, whereby the unfolded sealing portion could function as a vent region. Here, the glass wool was inserted in a size occupying at least 90% of the volume of the sealed space formed by the concave portion (I). The WVTR of the case was about 0 g/m$^2\cdot$day or so. A copper film (thickness about 18 $\mu$m) having a thermal conductivity of about 405 W/m·K (based on 20°C) was used as the thermally conductive layer. The case was manufactured to have a width of 9 cm or so, a length of 12 cm or so, and a thickness of 3 mm or so.

**Example 12.**

A PET (poly(ethylene terephthalate)) film (thickness: about 10 $\mu$m), an EVOH (ethylene vinyl alcohol) film (thickness: about 40 $\mu$m), and a PE (polyethylene) hot melt film (thickness: about 50 $\mu$m) (melting point: about 140°C) were laminated in this order to manufacture an outer shell. As shown in Fig. 6, a concave portion (I) was formed in the central portion of the outer shell to prepare an upper outer shell (121) and a lower outer shell (122), respectively. After attaching a thermally conductive layer to the concave portion (I) of the upper and lower outer shells (121, 122), the mineral wool impregnated with water, and the like in Example 6 was placed on the thermally conductive layer, and after laminating the upper and lower outer shells (121, 122), the PP hot melt films were fused to each other at the sealing portion (S), thereby manufacturing a fire extinguishing device. Thereafter, three-sided sealing portions of the four-sided sealing portions (S) were folded, whereby the unfolded sealing portion could function as a vent region. Here, the mineral wool was inserted in a size occupying at least 90% of the volume of the sealed space formed by the concave portion (I). The WVTR of the case was about 0.27 g/m$^2\cdot$day or so. As the thermally conductive layer, an aluminum foil having a thermal conductivity of about 235 W/mK (based on 20°C) or so and a thickness of about 50 $\mu$m or so was used. The case was manufactured to have a width of 9 cm or so, a length of 12 cm or so, and a thickness of 3 mm or so.

**Comparative Example 5.**

A fire extinguishing device was manufactured in the same manner as in Example 10, except for applying no thermally conductive layer.

**Comparative Example 6.**

A fire extinguishing device was manufactured in the same manner as in Example 12, except that the mineral wool obtained in Comparative Example 2 was used. In this process, an aluminum foil having a thermal conductivity of about 235 W/mK (based on 20°C) or so and a thickness of about 50 $\mu$m or so was used as the thermally conductive layer.

**Comparative Example** 7.

A fire extinguishing device was manufactured in the same manner as in Example 7, except that the thermally conductive layer was changed. Here, a manganese foil having a thermal conductivity of about 7.81 W/mK (based on 20°C) or so and a thickness of about 20 $\mu$m or so was used as the thermal conductive layer.

**Comparative Example 8.**

A fire extinguishing device was manufactured in the same manner as in Example 7. However, in this case, a polyurethane foam pad, as a known insulating material, was inserted into the case instead of the fire extinguishing composition to manufacture the fire extinguishing device.

The evaluation results for the examples and comparative examples were summarized and described in Tables 3 and 4 below. In Tables 3 and 4 below, the meanings of M and $\Delta T_f$ are the same as in Tables 1 and 2. Also, in Tables 3 and 4, the water content is the weight of water included when the weight of the fire extinguishing composition of the example or comparative example is 100%, and the WVTR is the WVTR (unit: g/m$^2\cdot$day) of the case used in the manufacture of the fire extinguishing device. In addition, in Tables 3 and 4 below, the thermal conductivity is the thermal conductivity of the thermally conductive layer applied to the fire extinguishing device (unit: W/mK) (based on 20°C).

[Table 3]

|  | Example | | | | | |
|---|---|---|---|---|---|---|
|  | 7 | 8 | 9 | 10 | 11 | 12 |
| Water content (weight%) | 71.9 | 71.9 | 66.7 | 60 | 72 | 54.5 |
| WVTR | 0 | 0.11 | 0.27 | 0.11 | 0 | 0.27 |
| Thermal conductivity | 401 | 235 | 138 | 405 | 405 | 235 |
| M | - | - | - | 10.7 | 2.8 | 6.7 |
| $\Delta T_f$ | - | - | - | 20 | 15.7 | 24.8 |
| Convection test | Pass | Pass | Pass | Pass | Pass | Pass |
| Chain ignition test | Pass | Pass | Pass | Pass | Pass | Pass |
| Storage stability | Pass | Pass | Pass | Pass | Pass | Pass |

[Table 4]

|  | Comparative Example | | | |
|---|---|---|---|---|
|  | 5 | 6 | 7 | 8 |
| Water content (weight%) | 72 | 45 | 71.9 | - |
| WVTR | 0 | 0.27 | 0 | 0 |
| Thermal conductivity | - | 235 | 7.81 | 401 |
| M | 2.8 | 12.5 | - | - |
| $\Delta T_f$ | 15.7 | 46.3 | - | - |
| Convection test | NG | NG | NG | NG |
| Chain ignition test | NG | NG | NG | NG |
| Storage stability | Pass | Pass | Pass | Pass |

From the results in Tables 3 and 4, it can be confirmed that there is a difference in the shape of the fire extinguishing device, but excellent results are shown in the convection test and chain ignition test by adjusting the thermally conductive layer and the water content in the fire extinguishing device.

**Claims**

1. A composition, comprising:

   a vaporizable substance;
   a fire extinguishing agent which is one or more selected from the group consisting of phosphoric acid, phosphate, a phosphonate compound, and a phosphate compound; and
   a carbonizable organic material, and
   wherein the composition exhibits a latent heat of 500 J/g.

2. The composition according to claim 1, wherein an amount of the vaporizable substance is 50 weight% or more.

3. The composition according to claim 1, wherein the fire extinguishing agent has a solubility of 5 g or more in 100 g of water at 25°C.

4. The composition according to claim 1, further comprising a freezing point adjuster so that a $\Delta Tf$ according to the Equation 1 below is from 5 to 50:

[Equation 1]

$$\Delta T_f = K_f \times M \times I$$

wherein the $K_f$ is a freezing point depression constant of the vaporizable substance, the M is a molal concentration of the freezing point adjuster with respect to the vaporizable substance, and the I is a number of ions formed by the freezing point adjuster or 1 in case where the freezing point adjuster is not the ionic compound.

5. A fire extinguishing device, comprising:

a case having a closed space inside;
a vaporizable substance existing in the closed space; and
a thermally conductive layer having a thermal conductivity of 10 W/mK or more at 20°C,
wherein an amount of the vaporizable substance in the closed space is 50 weight% or more.

6. The fire extinguishing device according to claim 5, wherein a portion of the case or the case has a WVTR (Water Vapor Transmission Rate) of 5 g/m²·day or less, the portion being 80% or more of an area of the case forming the closed space.

7. The fire extinguishing device according to claim 5, wherein the vaporizable substance has a boiling point within a range of 80°C to 120°C.

8. The fire extinguishing device according to claim 5, wherein the vaporizable substance is water.

9. The fire extinguishing device according to claim 5, further comprising a freezing point adjuster present in the closed space, wherein the freezing point adjuster is included such that $\Delta T_f$ of Equation 1 below is within a range of 5 to 50:

[Equation 1]

$$\Delta T_f = K_f \times M \times I$$

wherein the $K_f$ is a freezing point depression constant of the vaporizable substance, the M is a molal concentration of the freezing point adjuster with respect to the vaporizable substance, and the I is a number of ions formed by the freezing point adjuster or 1 in case where the freezing point adjuster is not the ionic compound.

10. The fire extinguishing device according to claim 9, wherein the freezing point adjuster has a solubility of 20 g or more in 100 g of the vaporizable substance at 0°C.

11. The fire extinguishing device according to claim 9, wherein the freezing point adjuster has a solubility of 70 g or more in 100 g of the vaporizable substance at 25°C.

12. The fire extinguishing device according to claim 9, wherein the freezing point adjuster has a molar mass of 300 g/mol or less.

13. The fire extinguishing device according to claim 9, wherein the freezing point adjuster is one or more selected from the group consisting of formate, acetate, carbonate, and sulfate.

14. The fire extinguishing device according to claim 5, wherein the thermally conductive layer exists between the vaporizable substance and the case.

15. The fire extinguishing device according to claim 5, further comprising one or more selected from the group consisting of a carbonizable organic material and a carbonization catalyst present in the closed space.

Fig. 1

Fig. 2

Fig. 3

Fig. 4

1002

2002

2001

1001

Fig. 5

Fig. 6

## INTERNATIONAL SEARCH REPORT

| International application No. |
| --- |
| **PCT/KR2024/004067** |

| A. | CLASSIFICATION OF SUBJECT MATTER |
| --- | --- |

**A62C 35/02**(2006.01)i; **A62C 35/10**(2006.01)i; **A62C 3/16**(2006.01)i; **A62C 2/06**(2006.01)i; **A62D 1/06**(2006.01)i; **A62D 1/00**(2006.01)i; **H01M 10/42**(2006.01)i

According to International Patent Classification (IPC) or to both national classification and IPC

| B. | FIELDS SEARCHED |
| --- | --- |

Minimum documentation searched (classification system followed by classification symbols)

A62C 35/02(2006.01); A62C 19/00(2006.01); A62C 3/16(2006.01); A62D 1/00(2006.01); B32B 27/00(2006.01); B65D 30/08(2006.01); B65D 81/18(2006.01); C09K 21/04(2006.01); C09K 21/10(2006.01); H01M 10/613(2014.01); H01M 10/625(2014.01); H01M 10/653(2014.01); H01M 10/659(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 조성물(composition), 기화성 물질(vaporizable substance), 배터리(battery), 소화 (fire extinguishing), 빙점(freezing point), 케이스(case)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2172449 B1 (KIM, Kwang Seob) 30 October 2020 (2020-10-30)<br>See paragraphs [0056]-[0066] and [0080] and figures 1-4. | 5,7-12,14 |
| Y | | 1-4,6,13,15 |
| Y | KR 10-2454923 B1 (LEE, Yong Kwon) 17 October 2022 (2022-10-17)<br>See paragraphs [0034]-[0037]. | 1-4,15 |
| Y | WO 2022-118735 A1 (TOPPAN INC.) 09 June 2022 (2022-06-09)<br>See paragraph [0025] and figures 1-2. | 6 |
| Y | CN 108609279 A (THE SECOND RESEARCH INSTITUTE OF CIVIL AVIATION ADMINISTRATION OF CHINA) 02 October 2018 (2018-10-02)<br>See paragraphs [0080]-[0083]. | 13 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 July 2024** | **04 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/004067**

**C. DOCUMENTS CONSIDERED TO BE RELEVANT**

| Category* | Citation of document, with indication, where appropriate, of the relevant passages | Relevant to claim No. |
|---|---|---|
| A | US 2020-0287252 A1 (BEIJING KEY POWER TECHNOLOGIES CO., LTD.) 10 September 2020 (2020-09-10)<br>  See paragraph [0057] and figures 1-6. | 1-15 |
| A | US 2020-0369963 A1 (CHESTNUT SPRINGS LLC) 26 November 2020 (2020-11-26)<br>  See paragraph [0049]. | 1-15 |

## INTERNATIONAL SEARCH REPORT
### Information on patent family members

International application No.

**PCT/KR2024/004067**

| Patent document cited in search report | | | Publication date (day/month/year) | Patent family member(s) | | | Publication date (day/month/year) |
|---|---|---|---|---|---|---|---|
| KR | 10-2172449 | B1 | 30 October 2020 | US | 2023-0201643 | A1 | 29 June 2023 |
| | | | | WO | 2021-246650 | A1 | 09 December 2021 |
| KR | 10-2454923 | B1 | 17 October 2022 | | None | | |
| WO | 2022-118735 | A1 | 09 June 2022 | CN | 116669937 | A | 29 August 2023 |
| | | | | EP | 4257207 | A1 | 11 October 2023 |
| | | | | JP | 2023-076558 | A | 01 June 2023 |
| | | | | JP | 7469507 | B2 | 16 April 2024 |
| | | | | KR | 10-2023-0113726 | A | 01 August 2023 |
| | | | | US | 2024-0173586 | A1 | 30 May 2024 |
| CN | 108609279 | A | 02 October 2018 | CN | 108609279 | B | 24 April 2020 |
| US | 2020-0287252 | A1 | 10 September 2020 | CN | 108054460 | A | 18 May 2018 |
| | | | | CN | 108054460 | B | 05 March 2021 |
| | | | | CN | 207587926 | U | 06 July 2018 |
| | | | | EP | 3550662 | A1 | 09 October 2019 |
| | | | | KR | 10-2019-0082974 | A | 10 July 2019 |
| | | | | KR | 10-2272600 | B1 | 02 July 2021 |
| | | | | WO | 2018-099396 | A1 | 07 June 2018 |
| US | 2020-0369963 | A1 | 26 November 2020 | US | 10752840 | B2 | 25 August 2020 |
| | | | | US | 11326104 | B2 | 10 May 2022 |
| | | | | US | 11608472 | B2 | 21 March 2023 |
| | | | | US | 2018-0142156 | A1 | 24 May 2018 |
| | | | | US | 2022-0220385 | A1 | 14 July 2022 |
| | | | | WO | 2018-098276 | A1 | 31 May 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230041414

**Non-patent literature cited in the description**

- *Potato Research*, 1988, vol. 31, 241-246